# EUROPEAN PATENT SPECIFICATION

(11) **EP 2 483 159 B1**
(45) Date of publication and mention of the grant of the patent: **12.11.2014**
(21) Application number: 10821118.6
(22) Date of filing: 28.09.2010
(51) Int. Cl.: B29C 65/30, B29C 65/18, B29C 65/74, B29C 65/00, B26D 7/26, B26F 1/44, B65B 31/02, B65B 43/46, B65B 51/14, B65B 59/04, B65B 61/06, B65B 7/16, B65B 7/28

(54) **METHOD AND APPARATUS FOR SEALING CONTAINERS**
VERFAHREN UND VORRICHTUNG ZUR VERSIEGELUNG VON BEHÄLTERN
PROCÉDÉ ET APPAREIL POUR L'ÉTANCHÉITÉ DE CONTENEURS

(30) Priority: 30.09.2009 US 247350 P
(43) Date of publication of application: 08.08.2012
(73) Proprietor: Ross Industries, Inc., Midland, VA 22728 (US)
(72) Inventor: DANIEK, V., Michael, Warrenton, VA 20186 (US); CLOWATER, William, Martin, Gordonsville, VA 22942 (US); JONES, Andrew, William, Remington, VA 22734 (US); KENNEDY, James, Ross, Fredericksburg, VA 22405 (US); THOMAS, Binu, George, Warrenton, VA 20187 (US); HOBGOOD, Benjamin, Oxford, NC 27565 (US)
(74) Representative: Hofstetter, Schurack & Partner
(86) International application number: PCT/US2010/050567
(87) International publication number: WO 2011/041320

(56) References cited:
- EP-A1- 1 038 778
- DE-A1-102004 051 923
- JP-A- 2002 019 727
- US-A- 5 155 971
- US-A- 5 155 971
- US-A1- 2001 000 558
- US-A1- 2007 022 717
- US-B1- 6 305 149

## Description

### FIELD OF THE DISCLOSURE

The present disclosure relates to an apparatus, a system and a method for mating and/or sealing containers. The present disclosure also relates to an apparatus, a system and a method for transporting containers.

### BACKGROUND OF THE DISCLOSURE

Thin film materials of a variety of sorts are being used in the packaging industry as a "lidding" material (or film). In many instances, the thin film is applied to the tops of rigid trays or cups in order to hermetically close and seal the contents of the trays or cups. The film may be applied by a heat sealing process, where a sealing die sandwiches a tray and a film for a predetermined period of time, with a predetermined pressure and a predetermined sealing temperature.

In cases where the lidding (or film) material is not a "Pre-die cut lid," but, rather, a film that is unwound from a film roll, it may be necessary to trim the film after it has been mated to the trays or cups. In most of these cases, the film is trimmed along the contours of the trays or cups. In some cases, the characteristics of the lidding require a heated blade to be used to complete the cutting process or cut the lidding and shrink the lidding edge back so there is little or no "film overhang" over a tray contour. The current state of technology requires equipping the blades with a separate heater component, which is part of a separate electrical circuit, or attaching a plurality of blades to a single heating plate.

U.S. Patent No. 5,475,965, issued December 19, 1995 to Mondini, discloses a "Machine for Sealing Containers by Applying a Covering Film." U.S. Patent No. 7,017,321, issued March 28, 2006 to Salvoni, also discloses a "Machine for Sealing Containers by Applying a Covering Film." U.S. Patent No. 5,097,939, issued March 24, 1992 to Shanklin et al., discloses a "Synchronous Position Product Feed System." US 5 155 971 A and US 6 305 149 B1 disclose a sealing system as described in the preamble of claim 1.

The present disclosure provides an apparatus, a system and a method for transporting, as well as mating and/or sealing containers.

### SUMMARY OF THE DISCLOSURE

The invention is directed to a sealing system with the features of claim 1. Further aspects of the invention are defined in claims 2-14.

Additional features, advantages, and embodiments of the disclosure may be set forth or apparent from consideration of the following attached detailed description and drawings. Moreover, it is to be understood that both the foregoing summary of the disclosure and the following attached detailed description are exemplary and intended to provide further explanation without limiting the scope of the invention as claimed.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and the various ways in which it may be practiced. In the drawings:
FIG. 1 shows an example of a sealing system, which is constructed according to the principles of the disclosure;
FIG. 2 shows an example of an in-feed system that may be used with the sealing system of FIG. 1;
FIG. 3 shows an example of a multi-lane configuration of the in-feed system of FIG. 2;
FIG. 4 shows another example of an in-feed system that is constructed according to the principles of the disclosure;
FIG. 5 shows an example of a multi-lane configuration of the in-feed system of FIG. 4;
FIG. 6 shows a yet another example of an in-feed system that is constructed according to the principles of the disclosure;
FIG. 7 shows a perspective view of the in-feed system of FIG. 6;
FIG. 8 shows an example of a state of the art container transferor in an open configuration, which may be operated by a transferor drive process that is configured according to principles of the disclosure;
FIG. 9 shows an example of a transferor drive process, according to the principles of the disclosure;
FIGS. 10A to 10D show various stages of operation of the container transferor of FIG. 8 by the transferor drive process of FIG. 9;
FIG. 11 shows an example of the container transferor that is constructed according to the principles of the disclosure;
FIG. 12 shows another example of a transferor drive process, according to the principles of the disclosure;
FIG. 13 shows another example of a container transferor in an open configuration, which is constructed according to principles of the disclosure;
FIG. 14 shows yet another example of a container transferor that is constructed according to principles of the disclosure;
FIGS. 15A to 15B show two phases of operation of a still further example of a container transferor, constructed according to the principles of the disclosure;
FIG. 16 shows an example of a multi-lane configuration of the container transferor of FIGS. 15A to 15B, constructed according to the principles of the disclosure;
FIGS. 17A to 17C show examples of an engaging member, constructed according to the principles of the disclosure;
FIGS. 18A to 18B show perspective top and bottom views, respectively, of an example of an upper tool, which is constructed according to the principles of the disclosure;
FIGS. 19A and 19B show perspective views of opposite sides of an example of a sealing module that is constructed according to principles of the disclosure;
FIG. 20 shows a cross-section view of a state-of-the-art dual-zone head in contact with a lower tool, which may be used in the upper tool assembly of the present disclosure;
FIG. 21 shows an example of gas flow in the dual-zone head of FIG. 20;
FIG. 22A shows a cross-section view of the head of FIG. 20 in contact with another example of a lower tool, according to the principles of the disclosure;
FIG. 22B shows a cross-section view of an example of a head and a lower tool, which are constructed according to the principles of the disclosure;
FIG. 22C shows a cross-section view of an example of the head of FIG. 22B in contact with the lower tool of FIG. 22B;
FIG. 22D shows a cross-section view of an example of the head of FIG. 22B and a portion of a docking station frame separated from a top plate, according to principles of the disclosure;
FIG. 22E shows a cross-section view of another example of the head of FIG. 22B separated from the docking station frame that remains affixed to the top plate;
FIG. 22F shows a cross-section front view of a plurality of heads mounted in the docking station frame and affixed to the top plate, according to principles of the present disclosure;
FIG. 22G shows a cross-section front view of an example of a docking station frame and plurality of heads removed from the top plate, according to the principles of the disclosure;
FIG. 22H shows a cross-section front view of one of the plurality of heads being removed from the docking station frame, according to the principles of the disclosure;
FIG. 22I shows a cross-section, detailed view of the sealing module body of FIG. 22B;
FIG. 22J shows a cross-section, detailed view of another example of a sealing module body, which is constructed according to the principles of the disclosure;
FIG. 23 shows an example of gas flow in the triple-zone head and lower tool configuration of FIG. 22A;
FIG. 24 shows a cross-section view of another example of a triple-zone head and lower tool configuration that is constructed according to the principles of the disclosure;
FIG. 25 shows a cross-section view of yet another example of a triple-zone head and lower tool configuration that is constructed according to the principles of the disclosure;
FIG. 26 shows a cross-section view of still further example of a triple-zone head and lower tool configuration that is constructed according to the principles of the disclosure;
FIG. 27 shows a perspective partial view of an example of a lower tool;
FIG. 28 shows a perspective exploded partial view of the example of the lower tool of FIG. 27;
FIG. 29 shows a perspective partial underside view of an example of a carrier insert, constructed according to the principles of the disclosure;
FIGS. 30A - 30C show various examples of existing, state-of-the-art cutting blades that may be used in the sealing assembly of FIG. 18A;
FIGS. 31A - 31B show various views of an example of a cutting blade, constructed according to the principles of the disclosure;
FIG. 32 shows another example of a cutting blade that is constructed according to the principles of the disclosure;
FIG. 33 shows yet another example of a cutting blade that is constructed according to the principles of the disclosure;
FIG. 34 shows an example of a blade clip that is constructed according to principles of the disclosure;
FIG. 35 shows a perspective partial view of an example of a blade that is fastened to a mounting base by means of one or more of the blade clips, according to principles of the disclosure;
FIG. 36 shows a partial cross-section view of the mounting base of FIG. 35;
FIG. 37 shows another example of a blade clip that is constructed according to principles of the disclosure;
FIG. 38 shows a perspective partial view of another example of a blade that is fastened to a mounting base by means of a bridge, according to the principles of the disclosure;
FIG. 39 shows a partial cross-section view of the blade of FIG. 38 fastened to the mounting base by means of the blade clip;
FIG. 40 shows an example of a cutting assembly that is constructed according to the principles of the disclosure;
FIG. 41 shows an example of the cutting assembly of FIG. 40 in a seal-cut position;
FIG. 42 shows a partial three-dimensional perspective view of an example of the cutting assembly of FIG. 41 configured in a pre-seal and a pre-cut position, which is constructed according to the principles of the disclosure;
FIG. 43 shows a partial three-dimensional perspective view of the cutting assembly of FIG. 42 configured in a sealing and a cutting position;
FIG. 44 shows an example of a lift that is constructed according to the principles of the disclosure;
FIG. 45 shows the lift of FIG. 44 in a full-lift position;
FIG. 46 shows another example of a lift that is constructed according to the principles of the disclosure;
FIG. 47 shows the lift of FIG. 46 in a full-lift position;
FIG. 48 shows yet another example of a lift that is constructed according to the principles of the disclosure;
FIG. 49A shows still a further example of a lift that is constructed according to the principles of the disclosure;
FIG. 49B shows still a further example of a lift that is constructed according to the principles of the disclosure;
FIG. 49C shows the lift of FIG. 49B in the lowered position;
FIG. 49D shows still a further example of a lift that is constructed according to the principles of the disclosure;
FIG. 49E shows the lift of FIG. 49D in the lowered position;
FIG. 50 shows a perspective view of an example of a lidding unwind system that is constructed according to the principles of the disclosure;
FIG. 51 shows a side view of the lidding unwind system of FIG. 50 with a plurality of dancer rollers located at an upper position, that is above a predetermined lower end position;
FIG. 52 shows a side view of the lidding unwind system of FIG. 50 with the dancer rollers located at the predetermined lower end position;
FIG. 53 shows a side view of the lidding unwind system of FIG. 50 with the upper rollers and the dancer rollers configured in a threading configuration, according to the principles of the disclosure;
FIG. 54 shows a perspective view of the lidding system of FIG. 50 with the upper rollers and the dancer rollers configured in the threading configuration;
FIG. 55 shows an example of a lidding roll centering system that is constructed according to the principles of the disclosure;
FIG. 56 shows an exploded view of the lidding roll centering system of FIG. 55; and
FIG. 57 shows a side view of the lidding roll centering system of FIG. 55.
The present disclosure is further described in the detailed description that follows.

### DETAILED DESCRIPTION OF THE DISCLOSURE

The embodiments of the disclosure and the various features and advantageous details thereof are explained more fully with reference to the non-limiting embodiments and examples that are described and/or illustrated in the accompanying drawings, and detailed in the following attached description. It should be noted that the features illustrated in the drawings are not necessarily drawn to scale, and features of one example may be employed with other embodiments as the skilled artisan would recognize, even if not explicitly stated herein. Descriptions of well-known components and processing techniques may be omitted so as to not unnecessarily obscure the embodiments of the disclosure. The examples used herein are intended merely to facilitate an understanding of ways in which the disclosure may be practiced and to further enable those of skill in the art to practice the embodiments of the disclosure. Accordingly, the examples and embodiments herein should not be construed as limiting the scope of the disclosure, which is defined solely by the appended claims and applicable law. Moreover, it is noted that like reference numerals represent similar parts throughout the several views of the drawings.

A "computer", as used in this disclosure, means any machine, device, circuit, component, or module, or any system of machines, devices, circuits, components, modules, or the like, which are capable of manipulating data according to one or more instructions, such as, for example, without limitation, a programmable logic controller (PLC), a motion controller, a processor, a microprocessor, a central processing unit, a general purpose computer, a super computer, a personal computer, a laptop computer, a palmtop computer, a notebook computer, a desktop computer, a workstation computer, a server, or the like, or an array of processors, microprocessors, central processing units, general purpose computers, super computers, personal computers, laptop computers, palmtop computers, notebook computers, desktop computers, workstation computers, servers, or the like. Further, the computer may include an electronic device configured to communicate over a communication link. The electronic device may include, for example, but is not limited to, a mobile telephone, a smart telephone, a cellular telephone device, a satellite telephone device, a cordless telephone, a software defined radio (SDR), a two-way radio, a personal data assistant (PDA), a mobile computer, a stationary computer, mobile station, a game console, a game controller, user equipment, or the like.

A "network," as used in this disclosure, means an arrangement of two or more communication links. A network may include, for example, the Internet, a local area network (LAN), a wide area network (WAN), a metropolitan area network (MAN), a personal area network (PAN), a campus area network, a corporate area network, a global area network (GAN), a broadband area network (BAN), any combination of the foregoing, or the like. The network may be configured to communicate data via a wireless and/or a wired communication medium. The network may include any one or more of the following topologies, including, for example, a point-to-point topology, a field bus topology, a bus topology, a linear bus topology, a distributed bus topology, a star topology, an extended star topology, a distributed star topology, a ring topology, a mesh topology, a tree topology, or the like.

A "communication link", as used in this disclosure, means a wired and/or wireless medium that conveys data or information between at least two points. The wired or wireless medium may include, for example, a metallic conductor link, a radio frequency (RF) communication link, an Infrared (IR) communication link, an optical communication link, or the like, without limitation. The RF communication link may include, for example, WiFi, WiMAX, IEEE 802.11, DECT, 0G, 1G, 2G, 3G or 4G cellular standards, Bluetooth, or the like.

The terms "including", "comprising" and variations thereof, as used in this disclosure, mean "including, but not limited to", unless expressly specified otherwise.

The terms "a", "an", and "the", as used in this disclosure, means "one or more", unless expressly specified otherwise.

Devices that are in communication with each other need not be in continuous communication with each other, unless expressly specified otherwise. In addition, devices that are in communication with each other may communicate directly or indirectly through one or more intermediaries.

Although process steps, method steps, algorithms, or the like, may be described in a sequential order, such processes, methods and algorithms may be configured to work in alternate orders. In other words, any sequence or order of steps that may be described does not necessarily indicate a requirement that the steps be performed in that order. The steps of the processes, methods or algorithms described herein may be performed in any order practical. Further, some steps may be performed simultaneously.

When a single device or article is described herein, it will be readily apparent that more than one device or article may be used in place of a single device or article. Similarly, where more than one device or article is described herein, it will be readily apparent that a single device or article may be used in place of the more than one device or article. The functionality or the features of a device may be alternatively embodied by one or more other devices which are not explicitly described as having such functionality or features.

A "computer-readable medium", as used in this disclosure, means any medium that participates in providing data (for example, instructions) which may be read by a computer. Such a medium may take many forms, including non-volatile media, volatile media, and transmission media. Non-volatile media may include, for example, optical or magnetic disks and other persistent memory. Volatile media may include dynamic random access memory (DRAM). Transmission media may include coaxial cables, copper wire and fiber optics, including the wires that comprise a system bus coupled to the processor. Transmission media may include or convey acoustic waves, light waves and electromagnetic emissions, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, a compact flash card, a thumb drive, any other memory chip or cartridge, a carrier wave as described hereinafter, or any other medium from which a computer can read.

Various forms of computer readable media may be involved in carrying sequences of instructions to a computer. For example, sequences of instruction (i) may be delivered from a RAM to a processor, (ii) may be carried over a wireless transmission medium, and/or (iii) may be formatted according to numerous formats, standards or protocols, including, for example, WiFi, WiMAX, IEEE 802.11, DECT, 0G, 1G, 2G, 3G or 4G cellular standards, Bluetooth, or the like.

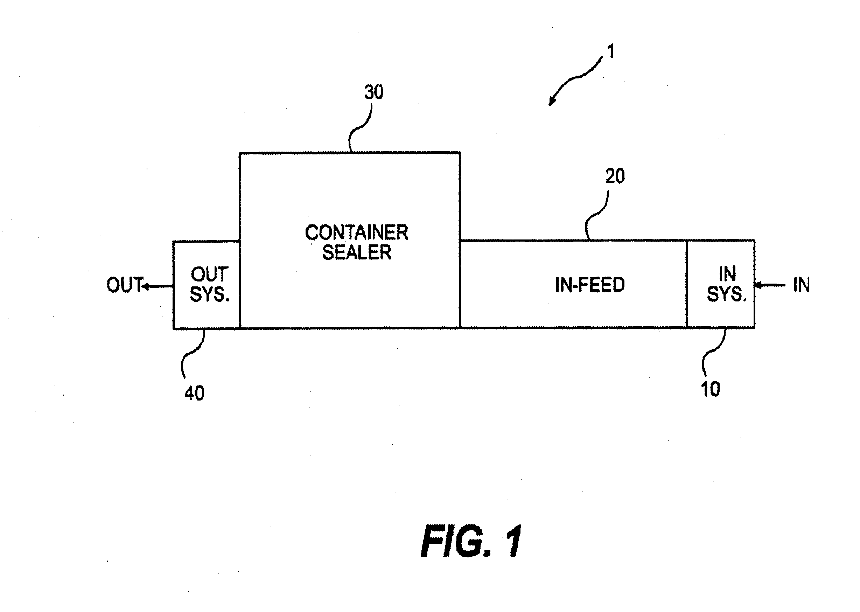

FIG. 1 shows an example of a sealing system (or sealer) 1, which is constructed according to the principles of the disclosure. The sealing system 1 includes an input system 10, an in-feed system (or in-feeder) 20, a container sealer 30, and an output system 40. As seen in FIG. 1, unsealed containers (not shown) may be received via the input system 10 into the in-feed system in the direction of the arrow "IN." The in-feed system transports the unsealed containers to the container sealer 30, which then seals the containers with a lidding. The sealed containers may then be output from the container sealer 30 via the output system 40 in the direction of the arrow "OUT." The lidding may include, for example, a film or a sheet that may be used to seal a container.

The input system 10 is configured to receive containers, such as, for example, trays, cups, cans, tubs, or the like, and forward the containers to the in-feed system 20. The input system 10 may include a transport mechanism such as, for example, a conveyor belt, a slide, a plurality of rollers, or the like.

The output system 40 is configured to receive sealed containers from the container sealer 30 and forward the sealed containers for further processing (such as, e.g., labeling, transport, storage, or the like).

Alternatively, the input system 10 may be removed and the containers may be provided directly to the in-feed system 20. Similarly, the output system 40 may be removed and the sealed containers maybe output directly from the container sealer 30 for further processing.

U.S. Patent No. 4,974,392, issued December 4, 1990 to Mondini, titled "Apparatus for Closing Containers with a Sealing Lamina," describes an intermittent conveyor 3 and a continuous conveyor 7 that may be used to provide a predetermined spacing between a plurality of containers C prior to heat-sealing the containers. The continuous conveyor 7 and intermittent conveyors 3 and 7, which are described, for example, at column 2, lines 34-57 of the patent, may be included in the in-feed system 20.

U.S. Patent No. 5,097,939, issued March 24, 1992 to Shanklin et al., titled "Synchronous Position Product Feed System," describes a controlled product feed system for delivering discrete products at high speed to a downstream industrial operation which requires accurate speed and position of delivery.

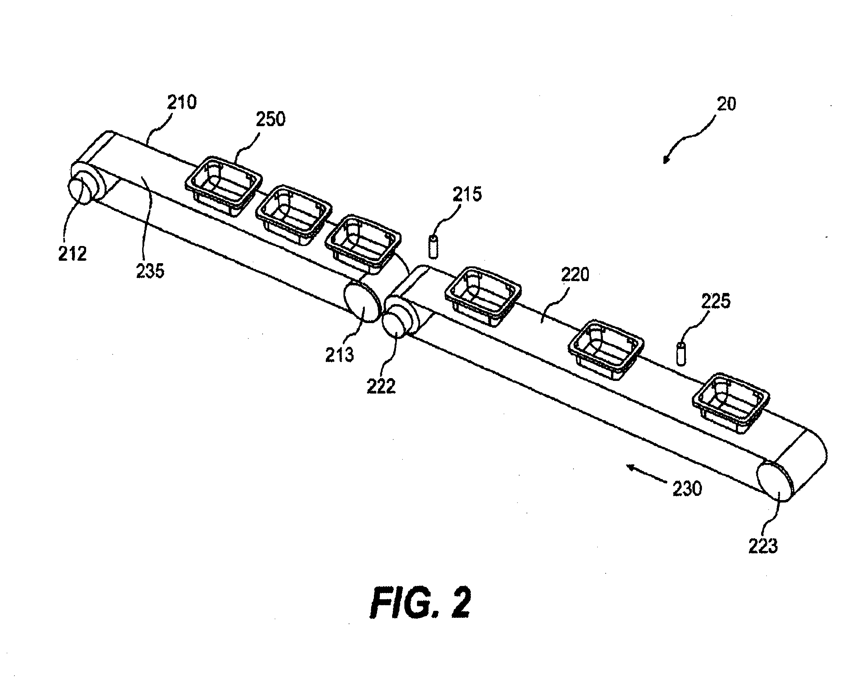

FIG. 2 shows an example of an in-feed system 20. The in-feed system 20 may comprise a pair of conveyors, including a spacing-pacing conveyor 210 and an input conveyor 220. The spacing-pacing conveyor 210 may be substantially similar to, or the same as the first (or intermittent) conveyor 3 In US 4,974,392, and the input conveyor 220 may be substantially similar to, or the same as the continuous conveyor in US 4,974,392. The in-feed system 20 may comprise an in-feed controller (not shown) that controls the in-feed system 20. The in-feed system 20 may further comprise a plurality of sensors 215, 225. The in-feed controller includes a computer (not shown). The sensors 215, 225, may include transducers (not shown) that are configured to accurately and reliably sense the location of the containers 250 as a function of time. The sensors 215, 225 may be coupled to the in-feed controller via a communication link (not shown) that carries sensor data from the sensors 215, 225 to the in-feed controller. The communication link may carry control data from the in-feed controller to the sensors 215, 225. The transducers may be constructed to sense and convert electrical, electromechanical, electromagnetic, photonic, or photovoltaic energy, so as to detect and track the position of each container 250 as it moves through the in-feed system 20.

Alternatively, the in-feed system 20 may include the product feed system described in U.S. Patent No. 5,097,939.

The input conveyor 220 may include a plurality of conveyor rolls 222, 223, including at least one drive roll 222 for driving the input conveyor 220. The input conveyor 220 may receive a series of unsealed containers 250 traveling in the direction 230 from the input system 10 (shown in FIG. 1) and transport the containers 250 to the spacing-pacing conveyor 210. The input conveyor 220 may be part of the in-feed system 20 or a part of the input system 10.

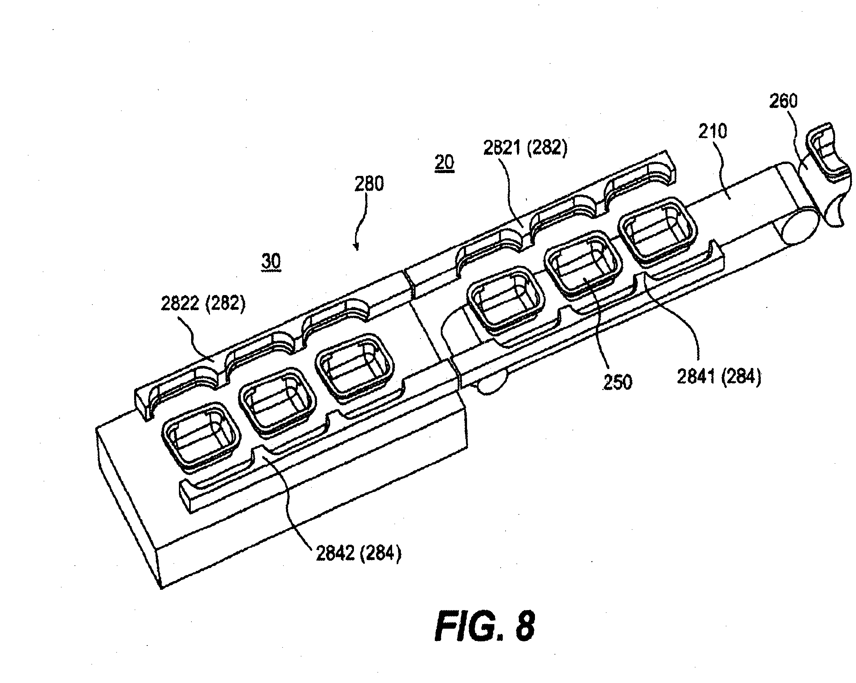

The spacing-pacing conveyor 210 may include a plurality of conveyor rolls 212, 213, including at least one drive roll 212 for driving the spacing-pacing conveyor 210. The spacing-pacing conveyor 210 may receive the containers 250 from the input conveyor 220 and positively space the containers 250 to a predetermined pitch, so that the containers 250 may be picked up by a container transferor 280 (for example, shown in FIG. 8). In this regard, the drive roll 212 may be driven by a motor (not shown) under the control of the in-feed controller, which may track and ensure proper positioning and pitch of the containers 250 on the spacing-pacing conveyor 210.

The sensor 225 may be located upstream of the spacing-pacing conveyor 210 and proximate to the input conveyor 220. The sensor 225 may detect the incoming containers 250, track the position of each container 250 and ensure via the in-feed controller (not shown) that there are enough containers 250 provided to the container transferor 280 to process a full batch.

The sensor 215 may be located proximate to the spacing-pacing conveyor 210. The sensor 215 may detect the incoming containers 250 and send sensor data to the in-feed controller, which may process the sensor data and adjust a motion profile of the spacing-pacing conveyor 210, so that a predetermined spacing (or pitch) may be achieved and maintained between the containers 250. The motion profile may include, for example, a velocity magnitude, an acceleration magnitude, a deceleration magnitude, and the like. The spacing-pacing conveyor 210 may have a high coefficient of friction (sticky) to assist in maintaining the predetermined spacing between the containers 250 until the containers 250 are received by the container transferor 280.

The sensors 215, 225 may be configured to sense and measure the velocity of the spacing-pacing conveyor 210 and the velocity of the input conveyor 220. A steady, randomly spaced supply of containers 250 on the input conveyor 220 may be received and precisely positioned to a predetermined pitch by the spacing-pacing conveyor 210.

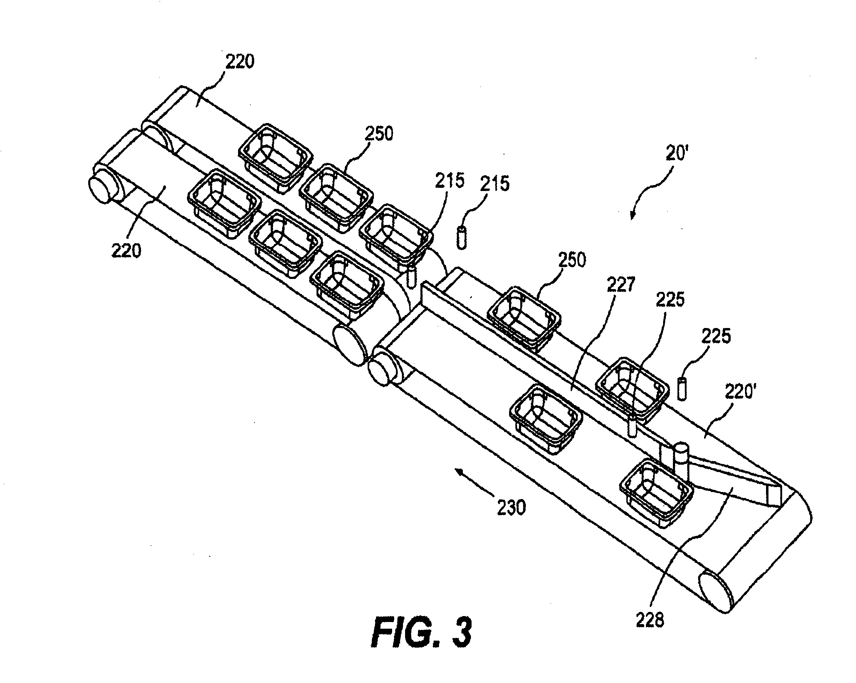

FIG. 3 shows an example of an in-feed system 20' constructed according to the principles of the disclosure. As seen, the in-feed system 20' may include a pair of spacing-pacing conveyors 210 and a multi-lane (or multi-track) input conveyor 220'. The multi-lane input conveyor 220' may include one or more lane dividers 227, which are configured to separate the lanes, and a plurality of the sensors 225, including at least one sensor 225 for each lane. The multi-lane input conveyor 220' may also include a lane gate 228 that may be moved to direct the flow of containers 250 to a desired one or more of the lanes of the multi-lane input conveyor 220'. Although shown as comprising two lanes, it is noted that the multi-lane input conveyor 220' may include three, four, or more lanes.

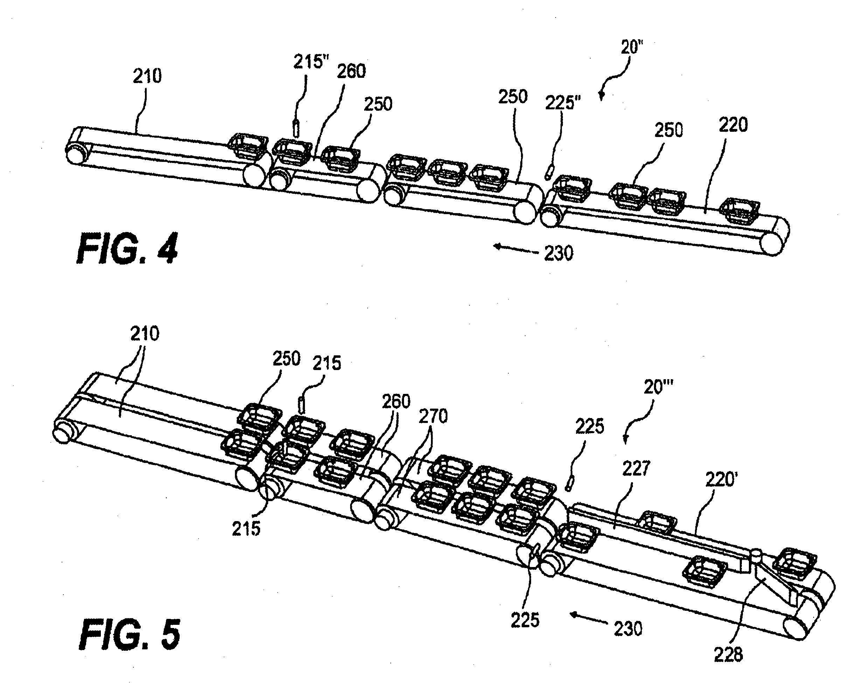

FIG. 4 shows another example of an in-feed system 20" constructed according to the principles of the disclosure. The in-feed system 20" may include four conveyors, including the spacing-pacing conveyor 210, an acceleration conveyor 260, a batching conveyor 270, and the input conveyor 220. The acceleration conveyor 260 and the batching conveyor 270 may be configured to manipulate spacing of the containers 250 prior to forwarding the containers 250 to the spacing-pacing conveyor 210. The in-feed system 20" is configured to facilitate high throughput rates of the containers 250, without any of the conveyors 210, 260, 270 or 220 having to stop.

The batching conveyor 270 may be configured to ensure that there are a sufficient number of containers 250 to complete a full batch. The batching conveyor 270 may be controlled by the in-feed controller, so that it may be actuated and driven to receive a random, intermittent supply of containers 250 from the input conveyor 220 and provide a reliable stream of containers to the acceleration conveyor 260. The batching conveyor 270 may be actuated and controlled by the in-feed controller based on a motion detection signal received from a motion sensor (not shown) located proximate the input conveyor 220 or the sensor data received from the sensor 225, which may include a motion detection signal.

The acceleration conveyor 260 may be configured to receive a substantially steady stream of containers 250 from the batching conveyor 270 and accelerate (or decelerate) the containers 250 so as to pull a gap, which may be substantially consistent, between the containers 250 before forwarding the spaced containers 250 to the spacing-pacing conveyor 210. The acceleration conveyor 260 may be actuated and controlled by the in-feed controller based on a motion detection signal received from a motion sensor (not shown) located proximate the batching conveyor 270 and/or the input conveyor 220. Alternatively (or additionally), the acceleration conveyor 260 may be controlled by the in-feed controller based on a motion detection signal received from the sensor 225 and/or sensor 215.

FIG. 5 shows yet another example of an in-feed system 20'" constructed according to the principles of the disclosure. The in-feed system 20'" may include a plurality of multi-lane conveyors, including a plurality of spacing-pacing conveyors 210, a plurality of acceleration conveyors 260, a plurality of batching conveyors 270, and one or more input conveyors 220'. For example, as seen in the figure, the in-feed system 20'" may include a pair of spacing-pacing conveyors 210, a pair of acceleration conveyors 260, a pair of batching conveyors 270, and a multi-lane input conveyor 220'.

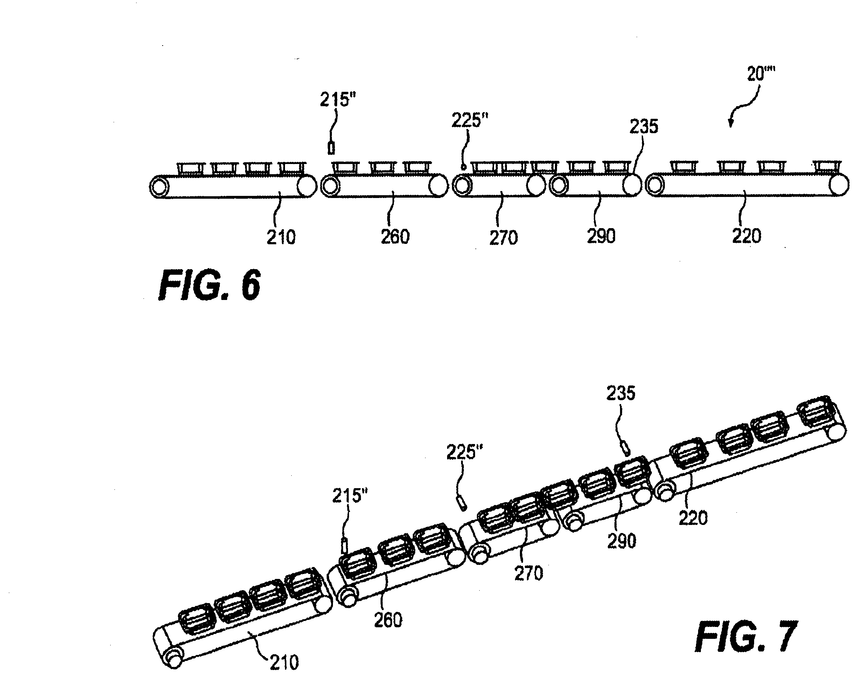

FIG. 6 shows still another example of an in-feed system 20"" constructed according to the principles of the disclosure. Further to the above description of the in-feed system 20", the in-feed system 20"" includes a gathering conveyor 290 and a sensor 235. The gathering conveyor 290 may be configured to provide greater control and accommodate higher speeds, while requiring less energy, a smaller servomotor, and lower power consumption to operate. The sensor 235 may be positioned proximate a upstream end of the gathering conveyor 290. The sensor 235 may be substantially the same (or different) as the sensor 225. The sensor 235 (or the in-feed controller) may count the number of containers 250 and forward a data signal to the in-feed controller. The in-feed controller may determine the ideal time to stop (or slow) the acceleration conveyor 260. The decision may be based on, for example, a detected disruption in the flow of containers 250, or a determination of an inadequate number of containers to complete a full batch.

When an inadequate quantity of containers 250 is detected, the in-feed controller may stop (or slow) the acceleration conveyor 260 and allow the gathering conveyor 290 and the batching conveyor 270 to run, thereby causing any incoming container 250 to stop as it contacts the surface of the acceleration conveyor 260. When a determination is made by the in-feed controller (or the sensor 235), based on, for example, the sensor data from the sensor 235, that a sufficient quantity of containers 250 have been collected to complete a full batch, the acceleration conveyor 260 may be started (or accelerated) and pitching of the containers 250 may resume.

FIG. 7 shows a perspective view of the in-feed system 20"".

FIG. 8 shows an example of a state-of-the-art container transferor 280, which may be operated according to the principles of the disclosure. The container transferor 280 comprises a pair of grippers 282, 284, which may be configured to engage and transfer one or more of the containers 250 to the container sealer 30, and to engage and transfer one or more sealed containers 250 from the container sealer 30 to the output system 40. The grippers 282 and 284 are linked to each other and driven simultaneously. The grippers 282, 284 include gripper portions 2821, 2822 and 2841, 2842. The gripper portions 2821, 2841 may be configured to engage and transfer one or more of the containers 250 from the spacing-pacing conveyor 210. The gripper portions 2822, 2842 may be configured to engage and transfer one or more of the containers 250 from the container sealer 30 to the output system 40 (shown in FIG. 1).

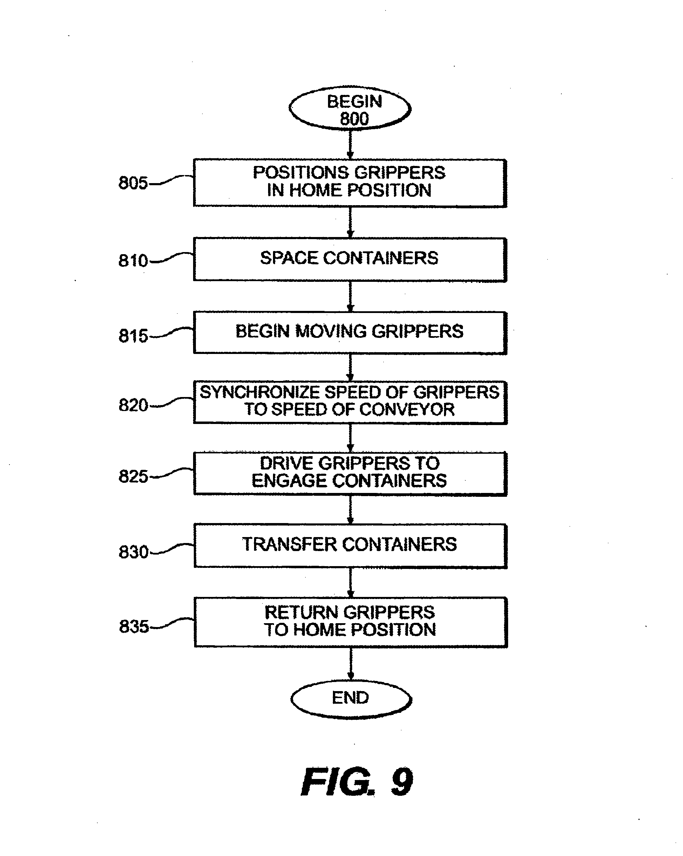

FIG. 9 shows an example of an on-the-fly transferor drive process 800, according to principles of the disclosure.

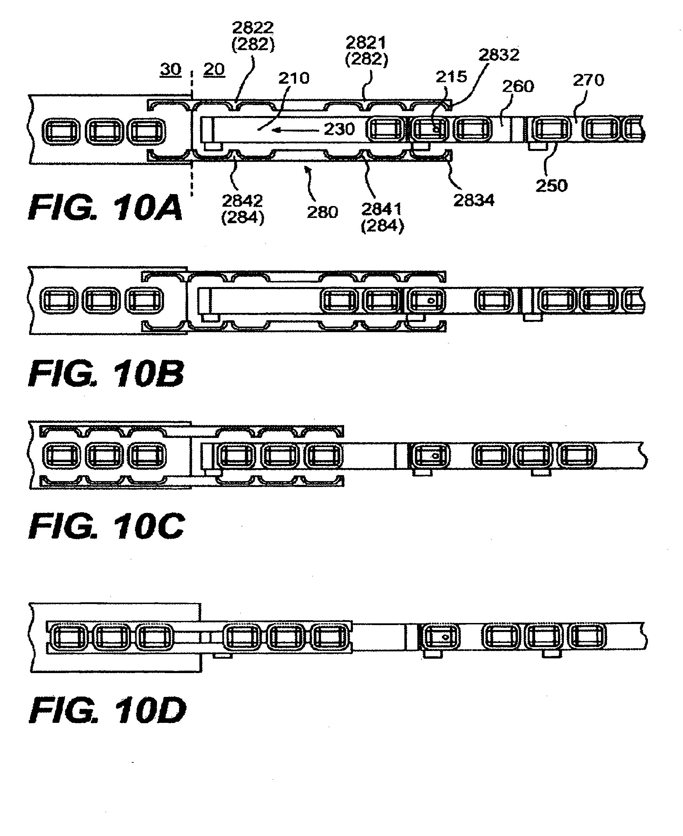

FIGS. 10A - 10D show various stages of the container transferor 280 driven according to the drive process 800.

Referring to FIGS. 9 and 10A - 10D, the grippers 282, 284 may be initially positioned in a home position, as shown in FIG. 10A (Step 805). As seen in the figure, the grippers 282, 284 may begin a machine cycle at the home position where the first distal ends 2832, 2834 of the grippers 282, 284, respective, may be located past an upstream end portion of the accelerator conveyor 260.

While the grippers 282, 284 are in the home position (shown in FIG. 10A), the in-feed system 20 may continue to transport the containers 250, spacing the containers 250 at a predetermined pitch that corresponds substantially to the pitch of the recesses in the grippers 282, 284 (Step 810). When a complete batch of containers 250 is gathered and the batch of containers 250 has reached a predetermined point in the in-feed system 20, as sensed by the sensor 215, the grippers 282, 284 may be actuated, moving the grippers 282, 284 in the direction 230, as shown in FIG. 10B (Step 815). The grippers 282, 284 are accelerated to a speed that substantially matches the speed of the pacing-spacing conveyor 210, as shown in FIG. 10C (Step 820). When the recesses in the gripper portions 2821, 2841 are aligned with the batch of containers 250 and the speed of the moving grippers 282, 284 substantially matches the speed of the batch of containers 250, the gripper portions 282, 284 may be actuated to close and engage the batch of containers 250, as shown in FIG. 10D (Step 825). The point at which the grippers 282, 284 close may be timed such that the gripper portions 2821, 2841 are aligned with the containers 250 on the pacing-spacing conveyor 210 at substantially the same time that the gripper portions 2822, 2842 are aligned with the sealed containers 250 in the container sealer 30.

The engaged batch of containers 250 may then be transported from the in-feed system 20 to the container sealer 30 (Step 830). Simultaneously, the batch of processed containers 250 may be engaged by the gripper portions 2822, 2842 and transported from the container sealer 30 to the output system 40. The grippers 282, 284 may then be returned to the home position (shown in FIG. 10A) to engage the next batch of containers 250 on the conveyor 210 (Step 835). The gripper portions 2822, 2842 may be synchronized with the pacing-spacing conveyor 210 just before and during engagement of the batch of containers 250 on the conveyor 210. After the batch of containers 250 have been lifted from the pacing-spacing conveyor 210, the gripper portions 2822, 2842 may be accelerated (or decelerated) to move faster (or slower) than the pacing-spacing conveyor 210 as needed.

Optionally, the velocity of the conveyor (not shown) in the output system 40 may be synchronized to, for example, the container transferor 280.

As seen in FIGS. 10A - 10D, the grippers 282 and 284 may be configured such that they are operated at substantially the same time by a common drive mechanism (not shown). The drive mechanism may include a pneumatic, a hydraulic, an electromechanical, or the like, mechanism, as is known in the related arts.

According to an aspect of the disclosure, a computer readable medium may be provided that embodies a computer program, which, when executed on, for example, the computer in the in-feed controller, may cause each of the Steps 805 to 835 to be carried out. The computer readable medium may include a section (or segment) of code (or instructions) for each of the Steps 805 to 835.

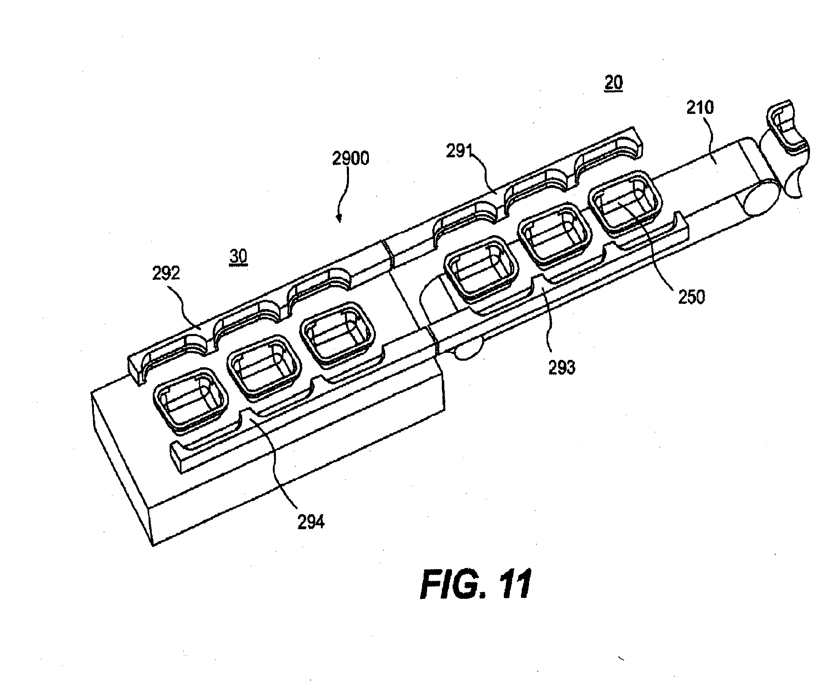

FIG. 11 shows an example of a container transferor 2900 that is constructed according to the principles of the disclosure. The container transferor 2900 includes grippers 291 - 294. The grippers 291 and 293 may be linked to each other and driven at substantially the same time by a common drive mechanism (not shown). The grippers 292 and 294 may be linked to each other and driven at substantially the same time by a common drive mechanism (not shown), which may be different from (or the same as) the drive mechanism that drives the grippers 291, 293. The grippers 291, 293 may be driven independently of the grippers 292, 294. For example, the grippers 291, 293 may be moved (or stopped) at different times than the grippers 292, 294, and the grippers 291, 293 may be closed (or opened) at different times than the grippers 292, 294. The drive mechanisms may include a pneumatic, a hydraulic, an electromechanical, or the like, mechanism, as is known in the related arts.

The container transferor 2900 is configured to buffer the containers 250 on the spacing-pacing conveyor 210 with regard to the containers 250 in the container sealer 30. For example, a batch of containers 250 may be in position on the spacing-pacing conveyor 210 to be engaged by the grippers 291, 293 before the containers 250 in the container sealer 30 have been fully processed. In this instance, the grippers 291, 293 may be actuated to engage the containers 250 on the spacing-pacing conveyor 210 while the grippers 292, 294 remain open until the containers 250 in the container sealer 30 are ready to be removed. The grippers 291, 293 may begin transport of the containers 250 from the spacing-pacing conveyor 210 before the grippers 292, 294 engage the sealed containers 250.

The grippers 291, 293 and 292, 294 may be equipped with a short stroke lift system where the containers 250 may be suspended for a time above the spacing-pacing conveyor 210 to allow time for the spacing-pacing conveyor 210 to process the next batch of containers 250.

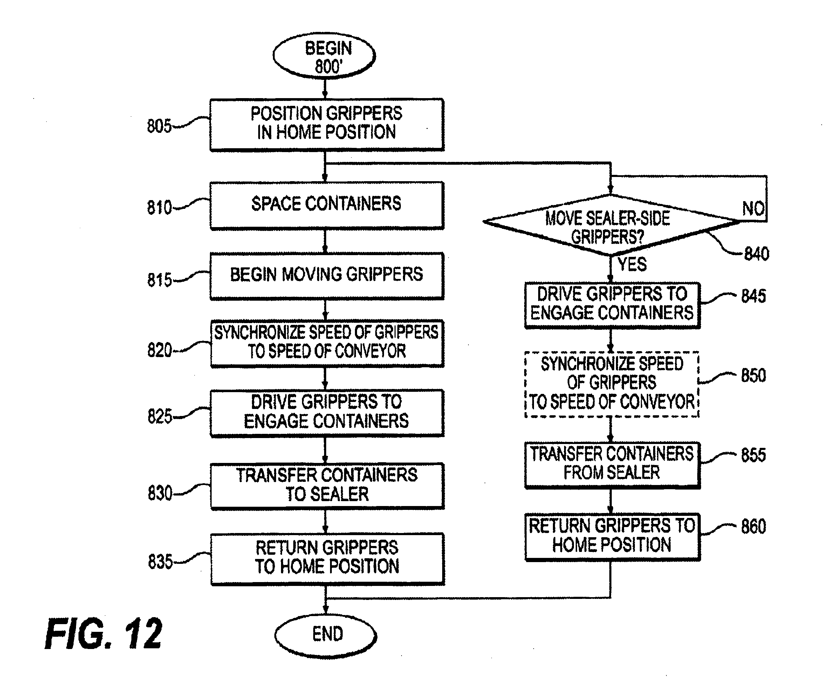

FIG. 12 shows an on-the-fly transferor drive process 800', according to the principles of the disclosure. Steps 805 through 835 of the process 800' may be carried out to operate the grippers 291, 293 (shown in FIG. 11) in substantially the same manner described above with reference to FIG. 9. The grippers 292, 294, however, may be operated independently of the grippers 291, 293.

Referring to FIGS. 11 - 12, and further to the description provided above with regard to FIG. 9, a decision may be taken whether to move the grippers 292, 294 (Step 840), independent of the decision to move the grippers 291, 293 (Step 815). When the process of sealing the containers 250 has been determined to be completed (YES at Step 840), then the grippers 292, 294 may be actuated to engage the containers 250 in the container sealer 30 (Step 845). Optionally, after engaging the sealed containers 250 (Step 845), the speed of movement of the grippers 292, 294 may be matched to the speed of the output conveyor (not shown) in the output system 40 (Step 850). After engaging the sealed containers 250 (Step 845), the sealed containers 250 may be transferred from the container sealer 30 to the output system 40 (Step 855). The grippers 292, 294 may then be returned to their home position (shown in FIG. 11) to engage the next batch of sealed containers 250 in the container sealer 30 (Step 860).

During the process of transferring the containers 250 from the pacing-spacing conveyor 210 (Step 830), or during the process of transferring the sealed containers 250 from the container sealer 30 (Step 855), the containers 250 may be lifted and suspended for a period of time before being transferred to the container sealer 30 or the output system 40, respectively, thereby allowing buffering of the containers 250 on the input side of the container sealer 30 with regard to the sealed containers 250 on the output side of the container sealer 30.

According to an aspect of the disclosure, a computer readable medium may be provided that embodies a computer program, which, when executed on the computer of, for example, the in-feed controller, may cause each of the Steps 805 to 860 of the process 800' to be carried out. The computer readable medium may include a section (or segment) of code (or instructions) for each of the Steps 805 to 860.

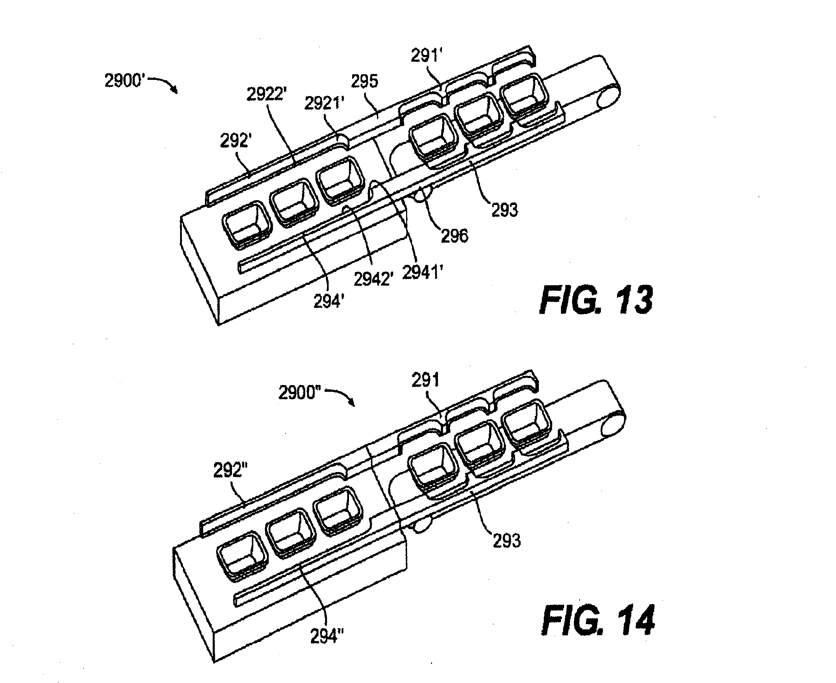

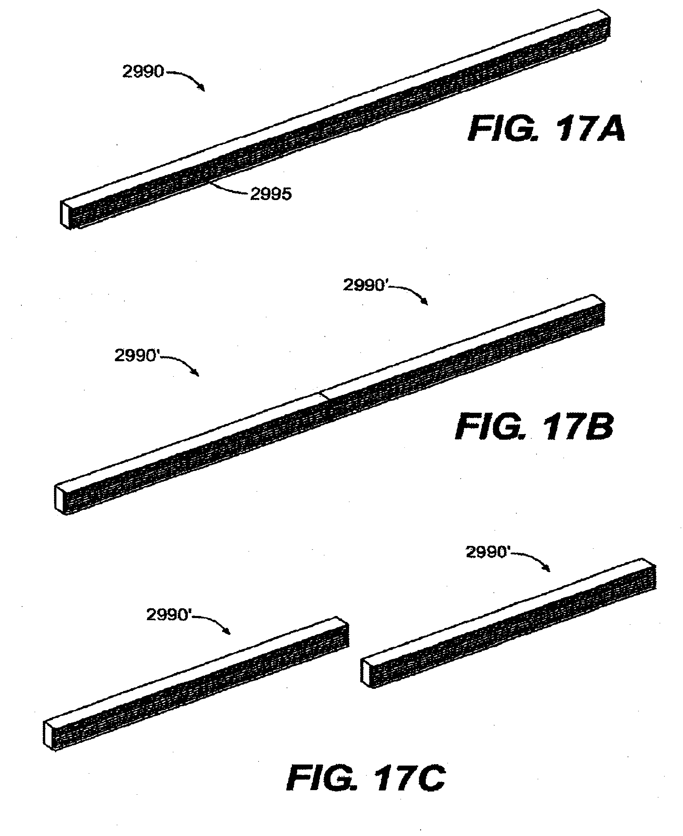

FIG. 13 shows another example of a container transferor 2900' that is constructed according to principles of the disclosure. The transferor 2900' includes a pair of grippers 295, 296, which may be linked to each other and a common drive mechanism (not shown). The grippers 295, 296 may be moved at substantially the same time. The grippers 295, 296 may include gripper portions 291', 293' that are configured to correspond to the shape of the containers 250, as seen in FIG. 8. The grippers 295, 296 may further include gripper portions 292', 294' that are not configured to correspond to the shape of the containers 250, but instead have substantially smooth, flat, longitudinal surfaces, including a push edge 2921', 2941', and a lip 2922', 2942' to help support the sealed containers 250. The gripper portions 292',294' may include, for example, the engagement member 2990 (or 2990') shown in FIG. 17A. The configuration of the gripper portions 292', 294' may allow for quicker disengagement of the sealed containers 250. Further, the speed of movement of the grippers 295, 296 may be substantially different from the speed of the conveyor (not shown) in the output system 40. The container transferor 2900' may be operated according to the drive process 800 shown in FIG. 9.

FIG. 14 shows yet another example of a container transferor 2900" that is constructed according to the principles of the disclosure. The container transferor 2900" is similar to the container transferor 2900 shown in FIG. 11, except that the engaging portions of the grippers 292", 294" are configured similar to those of the grippers 292', 294' shown in FIG. 13. The container transferor 2900" may be operated according to the drive process 800' shown in FIG. 12.

According to a further aspect of the disclosure, the container transferors 280 (shown in FIG. 8), 2900 (shown in FIG. 11), 2900' (shown in FIG. 13) or 2900" (shown in FIG. 14) may be implemented with a multi-lane configuration, such as, for example, the multi-lane configuration shown in FIG. 5, or any other multi-lane configuration that will be obvious to those having ordinary skill in the art, without departing from the scope or spirit of the disclosure.

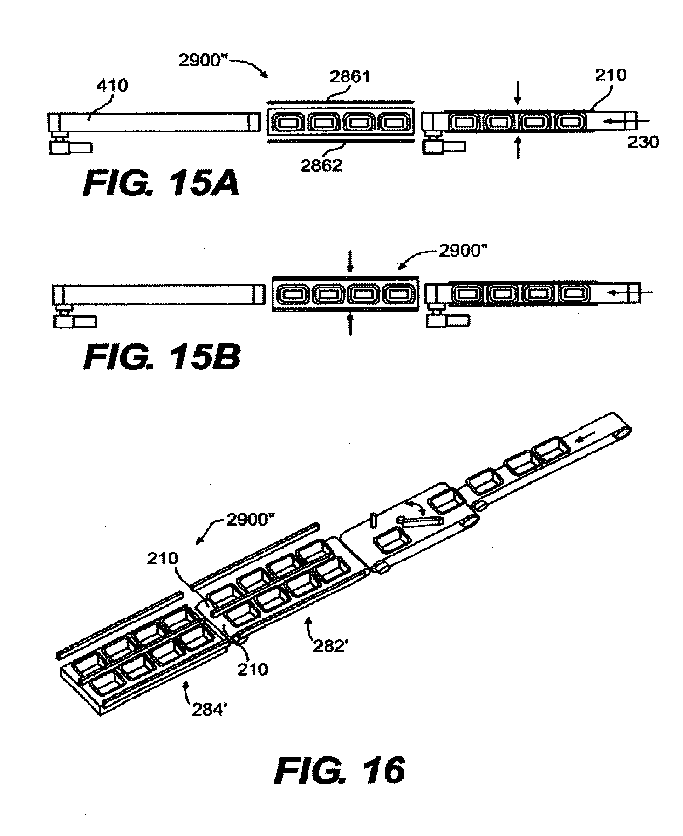

FIGS. 15A to 15B show two phases of operation of an example of a container transferor 2900'" having grippers 2861, 2862, constructed according to the principles of the disclosure. The grippers 2861, 2862 are configured to engage and transport the containers 250 from the spacing-pacing conveyor 210 to the container sealer 30, as well as engage and transport sealed containers 250 from the container sealer 30 to the output conveyor 410. The grippers 2861, 2862 may be controlled and moved at a velocity that is matched to the velocity of the spacing-pacing conveyor 210 just before and during engaging of the containers 250 on the spacing-pacing conveyor 210.

FIG. 16 shows an example of a container transferor 2900"" having a plurality of multi-lane grippers 282', 284', constructed according to the principles of the disclosure. As seen, the container transferor 2900"" may be configured to simultaneously (or independently) engage a plurality of batches of containers 250 on a plurality of spacing-pacing conveyors 210 and/or in the container sealer 30.

FIGS. 17A to 17C show examples of engaging members 2990 and 2990' constructed according to the principles of the disclosure. The engaging members 2990 or 2990' may be used in the grippers of the container transferor 280, 2900, 2900', 2900"', or 2900"" described above. The engaging member 2990 (2990') may be configured to engage the container 250 and provide a high degree of static friction to prevent the container 250 from moving while it is transported, such as, e.g., to, or from the container sealer 30. The engaging member 2990 (2990') may be constructed to minimize its weight while optimizing performance. In this regard, the engaging member 2990 may be constructed as two or more engaging member portions 2990' to facilitate easier removal, installation, or handling of the engaging member 2990.

FIG. 17A shows a perspective front view of the engaging member 2990. The engaging member 2990 may include a plurality of longitudinal ribs 2995 to facilitate optimal engagement with the containers 250 while maintaining a lighter weight construction of the engaging member 2990. The longitudinal ribs 2995 may be configured to handle containers 250 of varying heights. In particular, the channels between the ribs may be configured to receive and engage a flange of the varying height containers 250 to be transported.. The engaging member 2990 (or 2990') may be constructed from a lightweight, durable material such as, for example, aluminum, plastic, fiberglass, or the like. The engaging member 2990 may be configured to be easily affixed to (or removed from), for example, a gripper (such as, for example, the grippers 2861, 2862, shown in FIG. 15A, or the grippers 292', 294', 292", 294", shown in FIGS. 13, 14). Alternatively, the engaging member 2990 may be affixed directly to the transferor as a gripper.

FIG. 17B shows a perspective front view of a pair of engaging member portions 2990' that may be assembled instead of a single engaging member 2990, according to the principles of the disclosure. As seen, the engaging member 2990 may be assembled from a plurality of smaller engaging member portions 2990'. This configuration may be practical where the engaging members 2990 are large and difficult for an operator to handle alone. FIG. 17C shows a perspective exploded view of the engaging member portions 2990'.

While the transferor of the examples shown in FIGS. 8, 10A - 11, and 13 - 16 may include a single set of grippers (for example, shown in FIGS. 15A, 15B) or a double set of grippers (for example, shown in FIGS. 8, 10A-11, or 13 - 16), it is noted that the transferor may include three or more sets of grippers, as will be understood by those having ordinary skill in the art.

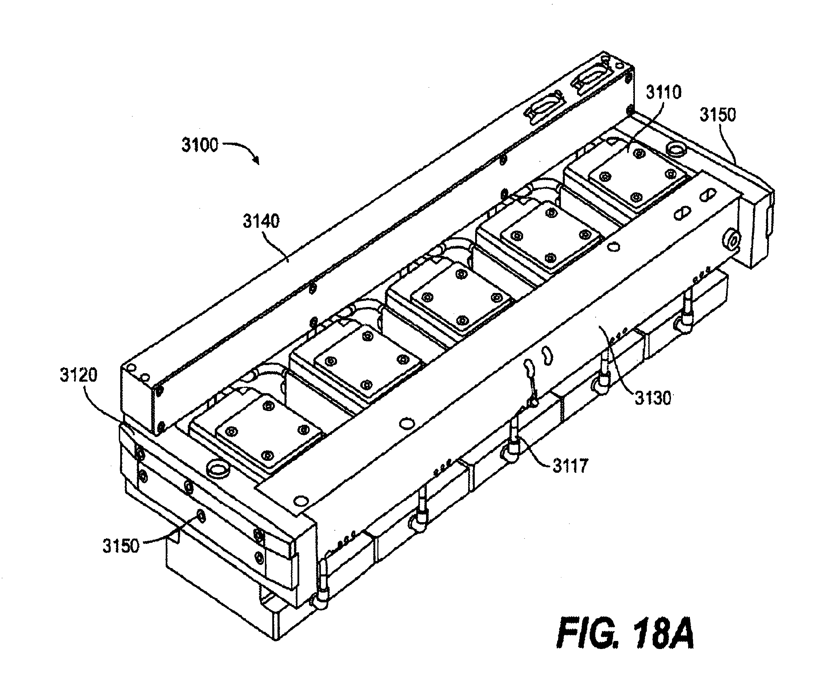

FIG. 18A shows a perspective top view of an example of an upper tool 3100, which is constructed according to the principles of the disclosure. The upper tool 3100 may be included, for example, in the container sealer 30 (shown in FIG. 1). The upper tool 3100 includes a docking station frame 3120 that may be removed from, for example, the container sealer 30 and one or more sealing modules 3110. The docking station frame 3120 includes a lower frame part 3130, and an upper frame part 3140. The lower frame part 3130 and the upper frame part 3140 may be integrally formed with, or coupled to form the docking station frame 3120 by means of, for example, fasteners (not shown), seals (not shown), and the like. The docking station frame 3120 may include a pair of mounting guides 3150 at each end of the docking station frame 3120, as seen in FIG. 18A. The mounting guides 3150 may be configured to slide into complementary grooves (not shown) in the container sealer 30.

The upper tool 3100 is configured to allow easy swap-out of the individual sealing modules 3110 from the docking station frame 3120, as well as to allow easy swap-out of the docking station frame 3120 from the container sealer 30. The docking station frame 3120 may include one or more sealing module receivers (not shown) for receiving and holding a respective one or more removable sealing modules 3110. The sealing modules 3110 may be removably coupled to the docking station frame 3120 by a sealing module fastener (not shown), which may include, for example, a head receiver guide (not shown), a tongue, a groove, a bolt, a nut, a screw, a pin, a clip, or the like.

The lower frame part 3130 (or upper frame part 3140) may include, for example, pneumatic supply/return lines, vacuum supply/return lines, fluid supply/return lines, and the like. The upper frame part 3140 (or lower frame part 3130) may include, for example, electric power supply lines, control lines, data lines, and the like. The lower frame part 3130 may be configured to align with a top plate (not shown) in the container sealer 30. The top plate may include a plurality of channels (not shown) for supplying or returning a gas, a fluid, a communication link, a power supply, or the like. The channels may align with corresponding channels in the lower frame part 3130 (or upper frame part 3140).

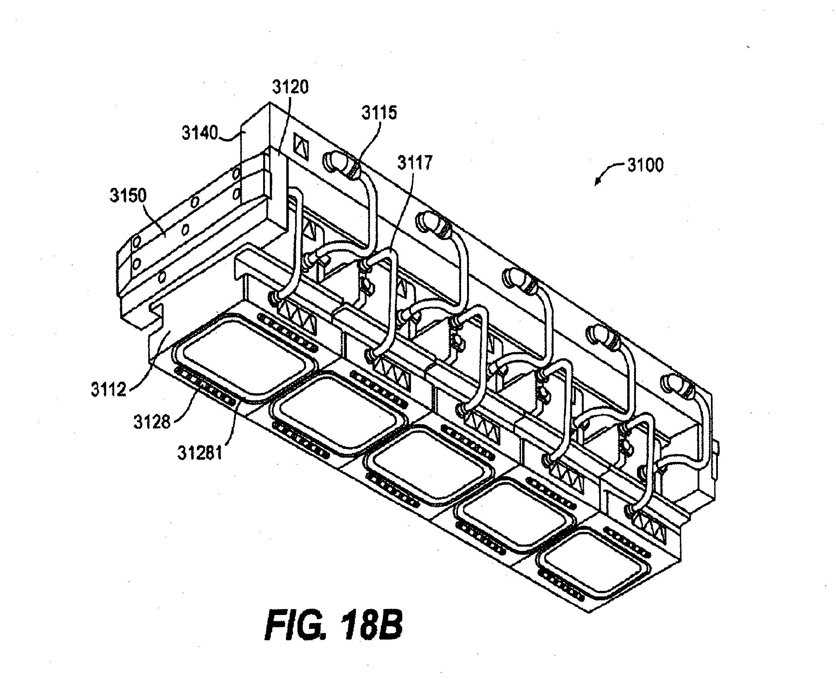

Each of the sealing modules 3110 may be coupled to a utility connector 3115 (shown in FIG. 18B). The sealing module fastener (not shown) may be configured to securely attach the sealing module 3110 in the docking station frame 3120. All of the sealing modules 3110 may be substantially the same and interchangeable with each other, so that any of the sealing modules 3110 may be placed in any of the sealing module receivers of the docking station frame 3120. Hence, the sealing modules 3110 are not position-sensitive with regard to the docking station frame 3120, or the upper tool 3100. Should any one or more of the sealing modules 3110 require repair or replacement, the sealing module(s) 3110 may be readily removed from the docking station frame 3120 (or upper tool 3100) and repaired or replaced.

While all of the sealing modules 3110 may be substantially the same in a given upper tool assembly 3100, the sealing modules 3110 may vary significantly between any different upper tool assemblies 3100. In this regard, the outer configurations of the associated docking station frames 3120 may be substantially the same to facilitate interchangeability in the container sealer 30, but the inner configurations of the docking station frames 3120 may vary significantly to accommodate the different sizes, types, and configurations of the sealing modules 3110 that may be used. Accordingly, the different sizes, types, and configurations of containers 250 may be processed in the container sealer 30 by simply replacing one upper tool assembly 3100 having a first set of sealing modules 3110 with a second upper tool assembly 3100 having a second set of sealing modules that are optimal for sealing the containers 250. It is noted that it may be necessary to also replace the transferor and/or lower tool to match the sealing modules 3110 in the second upper tool assembly 3100.

A plurality of the upper tool assemblies 3100 may be included in the container sealer 30 (shown in FIG. 1). Where the container sealer 30 includes a plurality of upper tool assemblies 3100, all of the corresponding docking station frames 3120 may be substantially the same and interchangeable with each other, so that any of the docking station frames 3120 may be placed in any docking station receiver (not shown) in the container sealer 30.

Although shown as having an in-line configuration, it is noted that the upper tool 3100 may have any configuration, including, e.g., a planar configuration (e.g., n x m matrix of sealing modules 3110, where n and m are non-zero positive integers that may have the same or different values), or a multi-planar array structure (e.g., n x m x p, where p is an integer greater than 1), or any other configuration, as understood by those having ordinary skill in the art, without departing from the scope or spirit of the disclosure.

FIG. 18B shows a perspective bottom view of the upper tool 3100. As seen, the upper tool 3100 may include a plurality of sealing modules 3110 coupled to the docking station frame 3120.

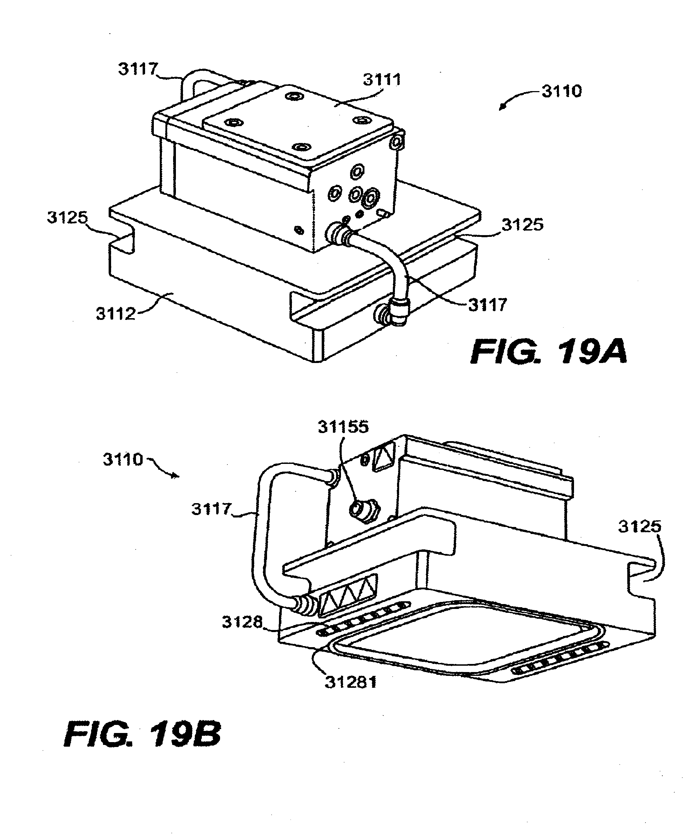

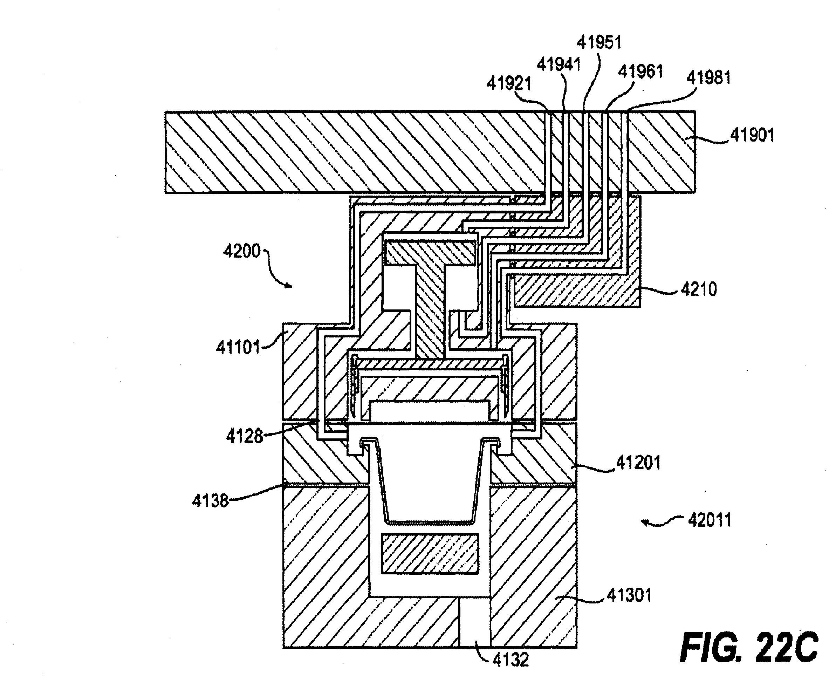

FIGS. 19A and 19B show perspective views of opposite sides of an example of a sealing module 3110 that is constructed according to principles of the disclosure. The sealing module 3110 includes a tower 3111, a chamber 3112, a utility connector 3117, and a port 31155 for connection to the utility connector 3115. The sealing module 3110 may further include a recess or groove 3125 to reduce the weight and cost of the sealing module 3110, as well as provide a handle for manipulation of the sealing module 3110. The utility connector 3117 may supply a gas to the sealing module 3110 and/or extract a gas from the sealing module 3110. The utility connector 3115 may include a communication link that may carry, for example, data signals, control signals, electric power, and the like. The chamber 3112 may include a plurality of seals 3128, 31281 for providing a hermetic seal between the chamber 3112 and a container carrier, such as, for example, the container carrier 4120' shown in FIG. 22C.

The tower 3111 and chamber 3112 may be constructed from two or more pieces, as seen in FIGS. 19A, 19B. In this case, the tower 3111 and chamber 3112 may include seals sandwiched there-between to prevent gas or fluid leaks.

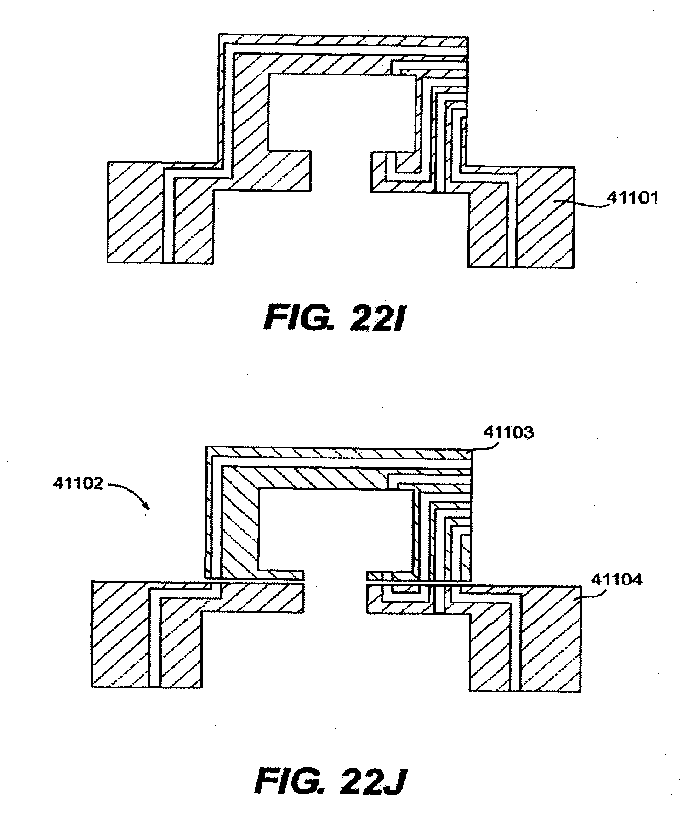

Alternatively, the tower 3111 and chamber 3112 may be machined from a single piece, thereby avoiding any need for seals, as seen, for example, in FIG. 22I.

The utility connector 3117 (or 3115) may be integrated into the tower 3111 and chamber 3112.

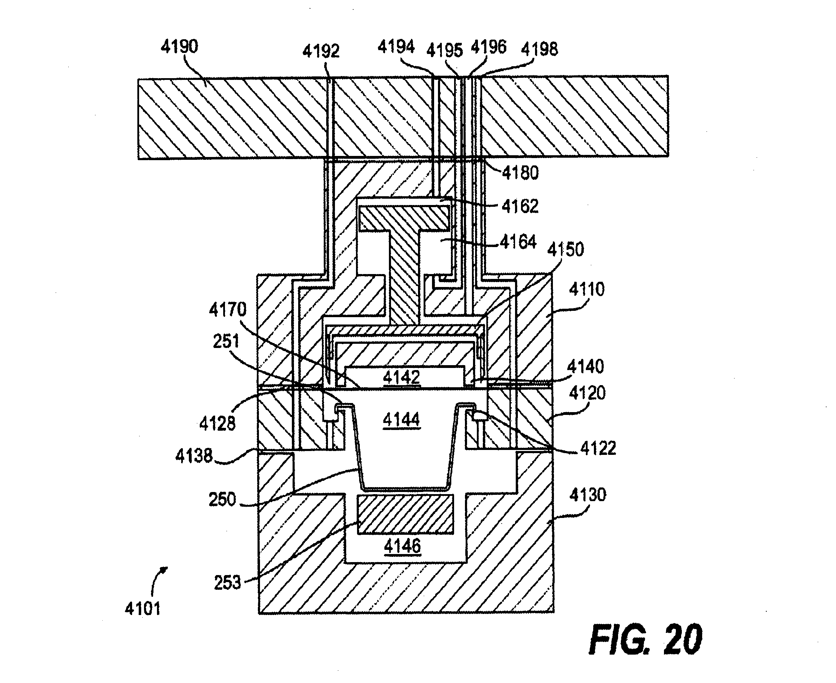

FIG. 20 shows a cross-section view of an existing, state-of-the-art dual-zone head 4100 in contact with a lower tool 4101, which may be used in the upper tool assembly 3100 (shown in FIGS. 18A - 18B). A similar dual-zone head assembly may be found in INPACK S Series Tray Sealers™ made by Ross® Industries, Inc., and specially designed for modified atmosphere packages (MAP). The head 4100 includes a sealing module body 4110, which houses a sealer 4140 and an optional cutter 4150. The sealer 4140 may be operated to seal a lidding 4170 to a container 250. The sealer 4140 may use, for example, temperature, time and/or pressure to affix the lidding 4170 to the container 250. The cutter 4150 may be included and implemented where it is desirable to cut the lidding 4170.

The container 250 may be nested in the lower tool 4101, which may include a container carrier 4120 and a chamber block 4130. The container 250 may be supported by a lift table 253. The container carrier 4120 may be hermetically (or airtight) sealed to the chamber block 4130 by, for example, a seal 4138 (such as, for example, a gasket, or the like). The container 250 may include a flange 251, which may rest on, for example, a container seal 4122 (such as, for example, a gasket formed of rubber, silicone, or the like). A contact seal 4128 may be provided on the container carrier 4120 (and/or the sealing module body 4110) to provide a hermetic (or airtight) seal between the sealing module body 4110 and the container carrier 4120 when the sealing module body 4110 and the lower tool 4101 are positioned in the sealing position (shown in FIG. 20).

The lidding 4170 may be stretched between the lower tool 4101 and the sealing module body 4110, thereby separating a head cavity (or zone) 4142 from a container cavity (or zone) 4144. The container cavity 4144 may include the container 250.

In the sealing position, gas (for example, air) may be evacuated from the lower tool cavity 4146, the container cavity 4144 and the head cavity 4142. A gas may be received from, for example, channels in the top plate 4190, which is part of the container sealer (for example, container sealer 30, shown in FIG. 1) and injected to the container cavity 4144 and the head cavity 4142 to preserve or enhance certain characteristics of the contents of the container 250. In some applications, the gas may be allowed to enter the head cavity 4142 to equalize the pressure above and beneath the lidding 4170. The gas is injected into the container cavity 4144 indirectly through the lower tool cavity 4146. The injected gas may include an inert gas, such as, for example, nitrogen, a blended gas, or the like. In the case of food products, the injected gas may preserve and enhance characteristics, such as, for example, freshness, color, shelf life, or the like. The gas may be evacuated from the head cavity 4142, the container cavity 4144 and the lower tool cavity 4146 through channels 4196 and 4198. The channel 4192 may be used to inject the replacement gas to the container cavity 4144 thru the lower tool cavity 4146.

FIG. 20 shows an example of a vertical configuration of gas evacuation and injection channels 4192, 4194, 4195, 4196, and 4198 in the sealing module body 4110 and the top plate 4190. The channel 4194 provides a conduit for evacuating (or removing) gases from, and injecting (or supplying) gases to a cavity 4162 above a piston 4160, which is rendered substantially air-tight by a piston seal 4168. The channel 4195 provides a conduit for evacuating gases from, and injecting gases to a cavity 4164 below the piston 4160. The channel 4196 provides a conduit for evacuating gases from, and injecting gases to the head cavity 4142. The channel 4198 provides a conduit for evacuating gases from the lower tool cavity 4146 and the container cavity 4144. The cavities 4142 and 4146 may be sealed from each other to prevent gases from flowing freely between the cavities. The cavities 4144 and 4146 are sealed from the cavity 4142 by the lidding 4170. The piston cavity 4164 is sealed from the head cavity 4142 with a piston seal (not shown). As seen in FIG. 20, the top plate 4190 may be hermetically sealed to the sealing module body 4110 by means of, for example, a plurality of seals 4180.

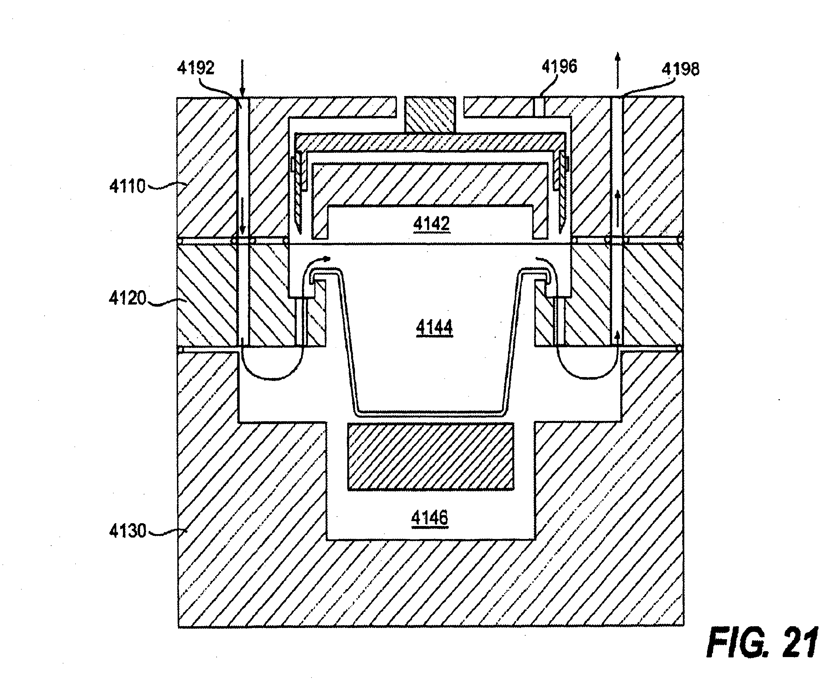

FIG. 21 shows an example of gas flow in the dual-zone head 4100 and the lower tool 4101. For example, air from the container cavity 4144 may be evacuated through the channel 4198 and up through the top plate 4190 (not shown in FIG. 21) to a vacuum valve (not shown). A replacement gas may be injected from, for example, a gas valve (not shown) through the top plate 4190 and down through the channel 4192 to the container cavity 4144 through the lower tool cavity 4146. The channel configuration shown in FIGS. 20 and 21, however, may render the head 4100 susceptible to restrictions on gas flow due to the configurations of the channels 4192 and 4198. Furthermore, a disadvantage of the dual-zone configuration may be that the container cavity 4144 is not separated from the lower tool cavity 4146 that is formed under the container 250 and within the chamber block 4130. In this regard, the entire volume of the gas in the cavities 4144 and 4146 should be evacuated and replaced with a replacement gas. Accordingly, every cycle of the sealing process, gas in the cavity 4146 is unnecessarily vented to the surrounding atmosphere and replacement gas is injected into the cavity 4146.

Referring to FIG. 21, in a MAP process the air is substantially always evacuated from the lower tool cavity 4146, as well as the container cavity 4144. In this dual zone approach, replacement gases, such as, for example, are supplied to both the container cavity 4144 and lower tool cavity 4146, thereby resulting in unnecessary waste of the replacement gas and larger resource needs to supply and remove the wasted replacement gas.

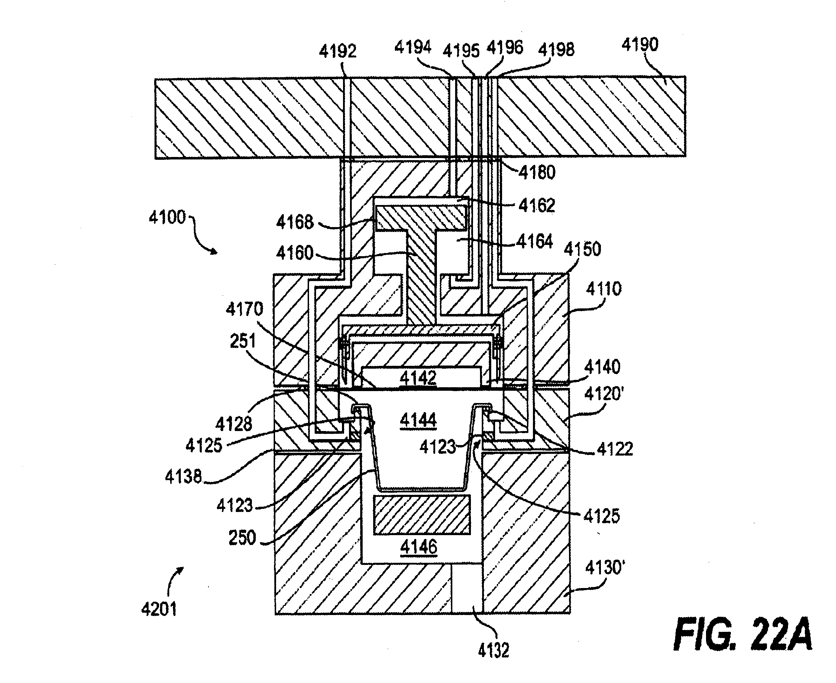

FIG. 22A shows a cross-section view of the head 4100 in contact with another example of a lower tool 4201, according to the principles of the disclosure. The lower tool 4201 configuration allows for the creation and maintenance of three separate zones (or cavities) 4142, 4144, 4146, each of which may have a different (or the same) pressure from the other two zones.

Further to the description provided above with regard to FIG. 20, the channel configuration of the lower tool 4201 differs from that of the lower tool 4101. For instance, the portion of the channels 4192' and 4198' in the container carrier 4120' are configured so that three separate cavities (or zones) 4142, 4144, and 4146, may be formed when the head 4100 contacts the lower tool 4201. The lower tool cavity 4146, which includes portions of the container carrier 4120' and the chamber block 4130', is configured to include a port 4132 for evacuating (or releasing) or injecting (or supplying) gas into the lower tool cavity 4146. Furthermore, the channels 4192' and 4198' may be provided with plugs 4123 (as seen in FIG. 22A) to allow for selection between dual-zone and triple-zone operation of the head 4100 when it contacts the lower tool 4201.

Where only triple-zone operation is desired, the container carrier 4120' may be formed to eliminate the ports 4125.

It is noted that while the port 4132 is shown in the lower chamber block 4130 for simplicity, the port 4130 may be located in the sealing module body 4110.

In triple-zone operation, the plugs 4123 may be placed in the channel ports 4125 of the channels 4192' and 4198' (as seen in FIG. 22A), thereby closing access to the channels 4192' and 4198' from lower tool cavity 4146 and preventing gas from escaping or being injected through the ports 4125. The lidding 4170, when stretched between the sealing module body 4110 and the container carrier 4120', may create a membrane that separates the head cavity 4142 from the container cavity 4144. Since there are no open airways through the carrier 4120' from the lower tool cavity 4146, and because the container 250 is nested in the container carrier 4120' and is supported by the seal 4122, the container 250 may function as a barrier that seals the container cavity 4144 from the lower tool cavity 4146. A sealing pressure may be created when the gas (e.g., air) begins to evacuate from the lower tool cavity 4146. Small differences in pressures between the container cavity 4144 and the lower tool cavity 4146 may be sufficient to pull the container 250 against the seal 4122 and hermetically seal off the cavities 4144 and 4146 from each other.

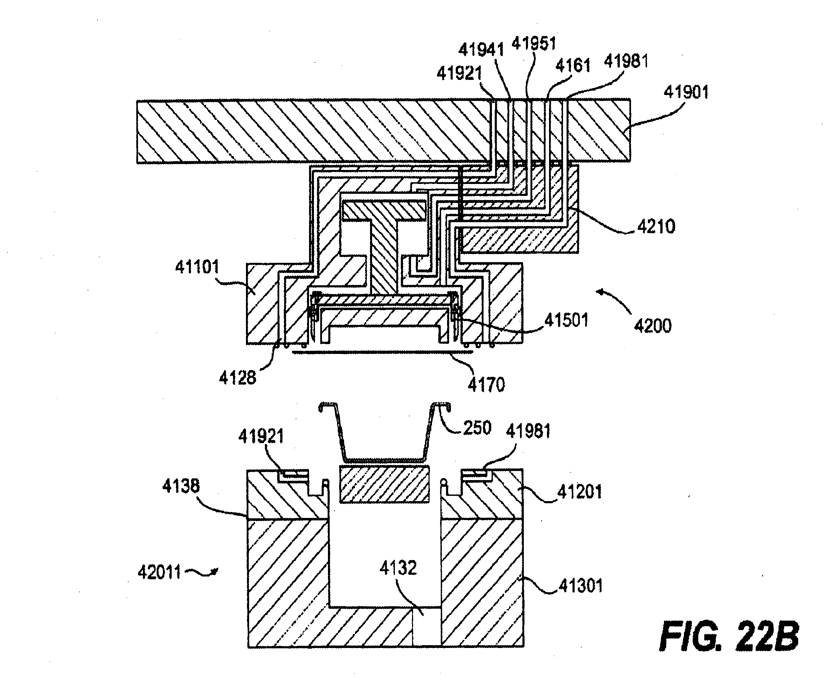

FIG. 22B shows a cross-section view of an example of a head 4200 and a lower tool 42011, which are constructed according to the principles of the disclosure. A sealing module body 41101, a channel duct 4210, and a top plate 41901 may include a horizontal configuration of gas evacuation and injection channels 41921, 41941, 41951, 41961, and 41981, as seen in the figure. The head 4200 may include a cutter 41501. The channels 41921, 41941, 41951, 41961, and 41981, may be formed in the sealing module body 41101, the channel duct 4210, and the top plate 41901. The channel duct 4210 may be a part of, or formed in, for example, the lower frame part 3130 (or upper frame part 3140) of the docking station frame (shown in FIGS. 18A, 18B). The top plate 41901 may be a part of the container sealer 30 (shown in FIG. 1). The channels 41921, 41941, 41951, 41961, and 41981 may perform substantially the same function as the channels 4192', 4194, 4195, 4196, and 4198 (shown in FIG. 22A).

It is noted that some or all of the channels 41921, 41941, 41951, 41961, and 41981, may be formed in only the lower tool 42011.

Referring back to FIGS. 18A - 18B, either the lower frame part 3130 or the upper frame part 3140 may include the channel duct 4210. The channel duct 4210 may be coupled to all of the sealing modules 3110 in the docking station frame 3120. The channel duct 4210, which may be "gun-drilled" throughout its entire length, may provide all (or some) of the gas (or fluid) supply/return lines to the sealing modules 3110.

The head 4200 may contact the lower tool 42011 to seal the lidding 4170 to the container 250. The lower tool 42011 may include a container carrier 41201, which may include portions of the channels 41921 and 41981, and a chamber block 41301.

FIG. 22C shows a cross-section view of an example of the head 4200 in contact with the lower tool 42011, according to the principles of the disclosure.

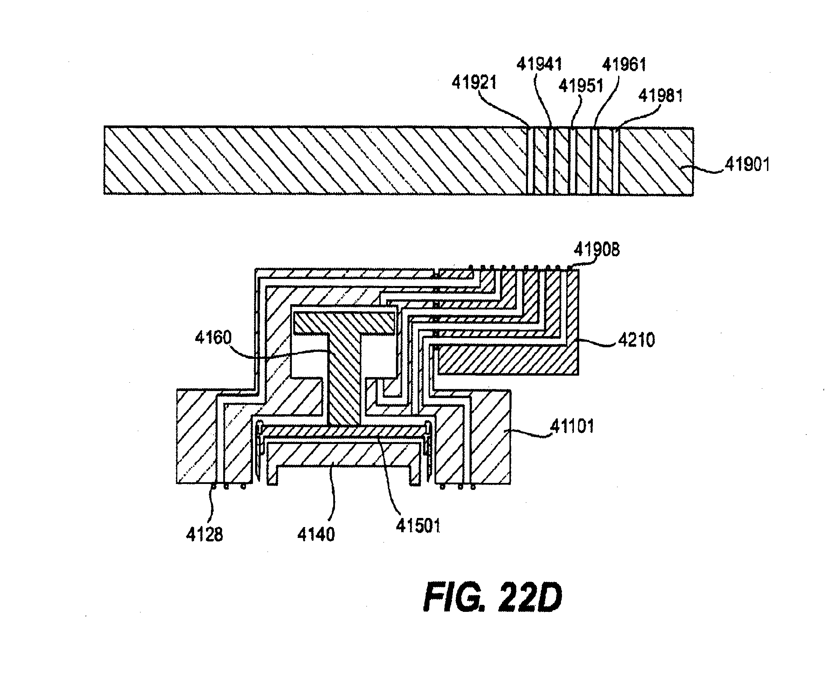

FIG. 22D shows a cross-section side view of an example of the head 4200 and docking station frame 3120 (shown in FIGS. 18A, 18B) separated from the top plate 41901. In this example, the channel duct 4210 is provided with the head 4200 when the head 4200 contacts the top plate 41901. The channel duct 4210 may be integrally formed with, or in the lower frame part 3130 (or upper frame part 3140) of the docking station frame 3120, or affixed to the lower frame part 3130 (or upper frame part 3140) by means of fasteners, such as, for example, screws, bolts, pins, rivets, nuts, spot welds, adhesives, or the like. A seal 41908 may be provided between the channel duct 4210 and the top plate 41901 to provide a hermetic seal of the channels 41921, 41941, 41951, 41961, 41981.

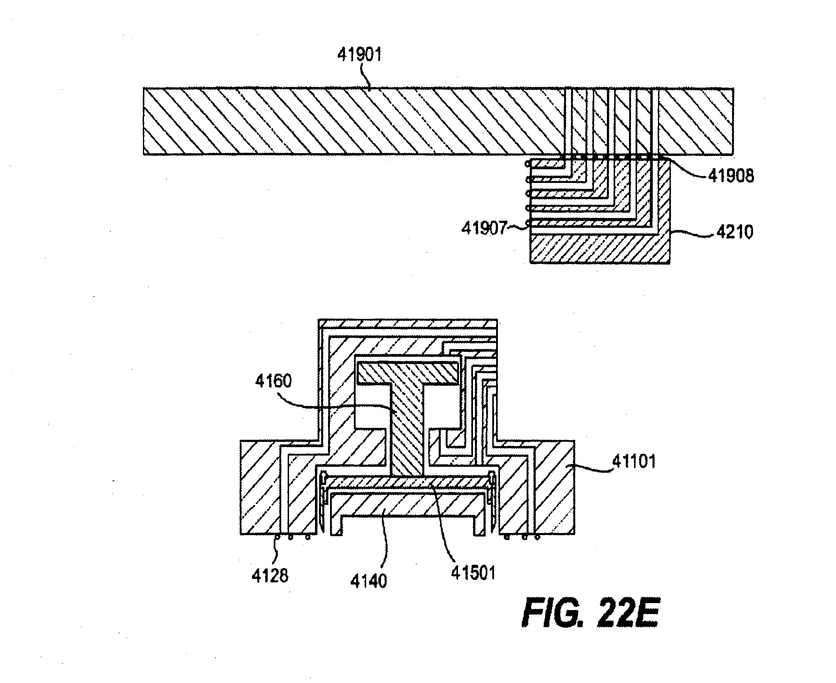

FIG. 22E shows a cross-section side view of another example of the head 4200 being removed from the channel duct 4210 and the top plate 41901. In this example, the docking station frame 3120 (shown in FIGS. 18A, 18B) remains in place with regard to the top plate 41901, but the sealing module associated with the head 4200 is removed from the docking station frame 3120. A seal 41907 may be provided between the channel duct 4210 and the sealing module body 41101.

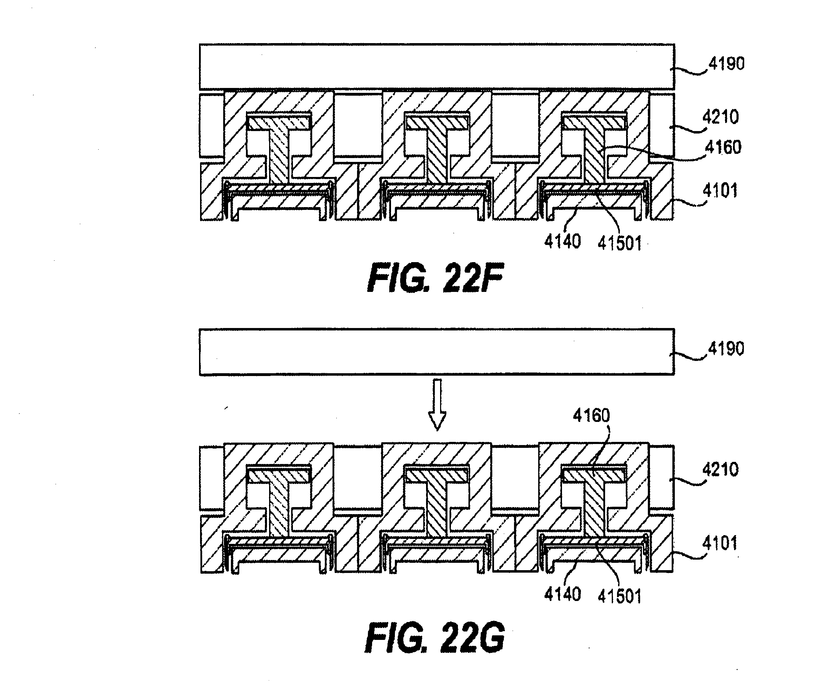

FIG. 22F shows a cross-section, front view of the plurality of heads 4200 (shown in FIG. 22B) mounted in, for example, the docking station frame 3120, which is attached to the top plate 4190 of the container sealer 30 (shown in FIG. 1). The upper tool assembly includes three separate heads, each of which may be connected to the channel duct 4210.

FIG. 22G shows a cross-section front view of the plurality of heads 4200 (shown in FIG. 22D) removed from the top plate 41901 together with the channel duct 4210. The docking station frame 3120 may include the common channel duct 4210 that may be removed from the top plate 4190. In this example, the channel duct 4210 is a single structure comprising channels (not shown) for each of the plurality of heads. As seen, the channel duct 4210 is separable with the heads.

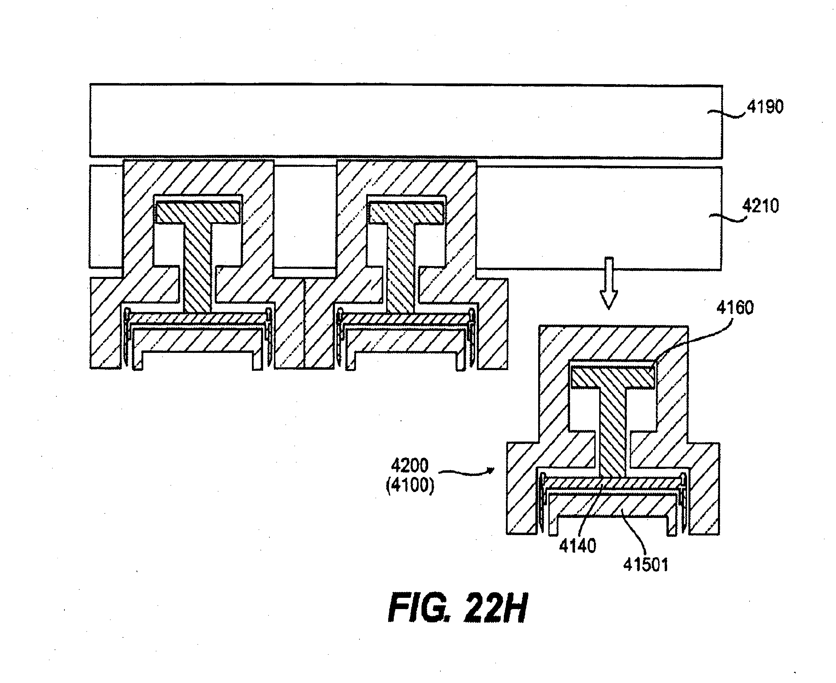

FIG. 22H shows a cross-section front view of one of the plurality of heads 4200 (shown in FIG. 22E) removed from the channel duct 4210. Each of the heads 4200 may be configured to be removable from the channel duct 4210. Meanwhile, the docking station frame 3120, including the channel duct 4210, is configured to be removable from the top plate 4190.

FIG. 22I shows a cross-section, detailed view of the sealing module body 41101, which is constructed according to the principles of the disclosure.

FIG. 22J shows a cross-section, detailed view of another example of a sealing module body 41102, which is constructed according to the principles of the disclosure. The sealing module body 41102 may include an upper portion 41103 and a lower portion 41104, which may be affixed to each other by a fastener (not shown). The fastener may include, for example, a screw, a bolt, a pin, a rivet, a nut, a spot weld, an adhesive, or the like.

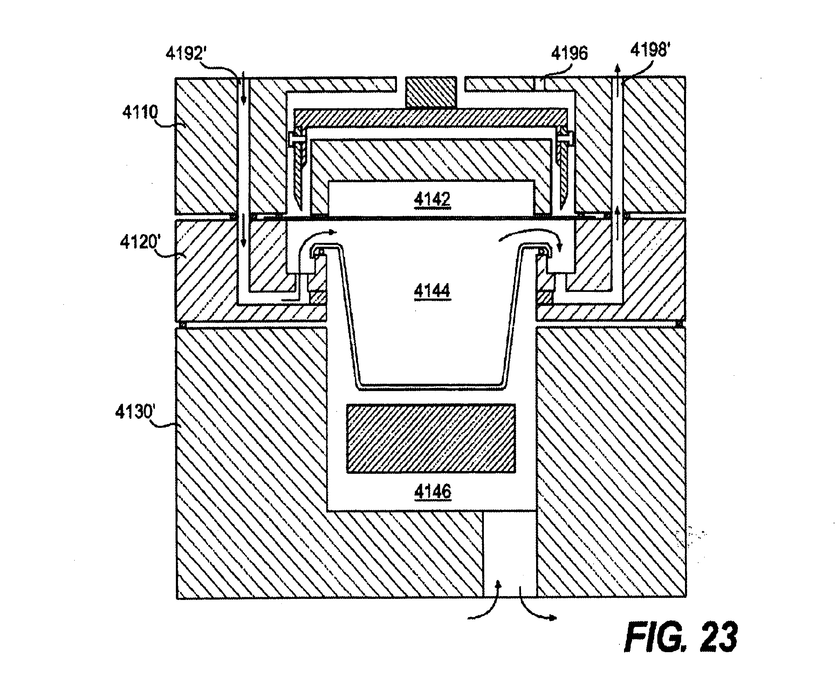

FIG. 23 shows an example of gas flow in the triple-zone head 4100 and lower tool body 4201, shown in FIG. 22A. For example, air from the container cavity 4144 may be evacuated through the channel 4198' and up through the top plate 4190 (shown in FIG. 22A) to a vacuum valve (not shown). The vacuum valve may be connected to the lower frame part 3130 (shown in FIGS. 18A, 18B). A replacement gas may be injected from, for example, a gas valve (not shown), through the top plate 4190 and down through the channel 4192' to the container cavity 4144. Gas may be prevented from flowing from (or to) the channels 4192', 4198' and/or the container cavity 4144 to (or from) the lower tool cavity 4146 by placement of the plugs 4123 in the channel ports 4125. Gas may be permitted to flow into and out from the lower tool cavity 4146 through the port 4132. The plugs 4123 are provided in the instance where a portion of channel 4198' is drilled from the side into the carrier 4120'. However, the carrier 4120' may be machined such that the plugs 4123 are not necessary, as understood by those having ordinary skill in the art.

The option of removable plugs 4123 may offer a channel configuration, as seen in FIGS. 22 and 23, that allows for selection between dual-zone and triple-zone operation of the sealing assembly, should it be desired.

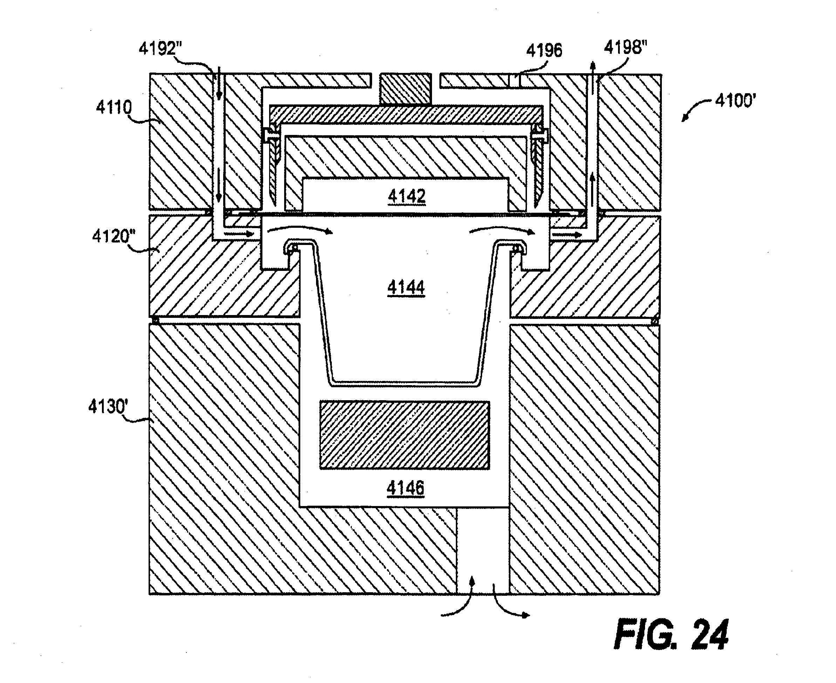

FIG. 24 shows an example of gas flow in the triple-zone head 4200 and lower tool body 42011, shown in FIG. 22B. Further to the description provided above with regard to FIG. 22B, the channel configuration of the lower tool body 42011 may differ from that the lower tool body shown in FIGS. 22 - 23 in that the portions of the channels 4192" and 4198" in the carrier 4120" may be configured to inject (or evacuate) gas to (or from) the container cavity 4144 with minimal restrictions to the flow of gas through the channels 4192" and 4198". Although shown as including a "sharp" 90° elbow in the portions of each of the channels 4192" and 4198" in the carrier 4120", the 90° elbow may be configured to include a "soft" 90° turn that gradually changes the direction of the gas flow through the channels 4192" and 4198", thereby minimizing disturbances to the flowing gas in the channels 4192" and 4198".

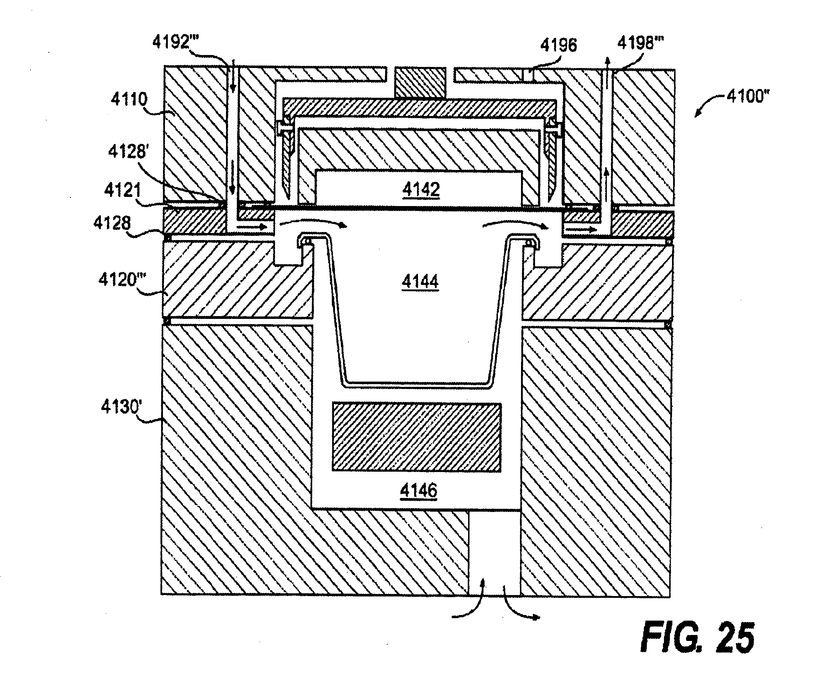

FIG. 25 shows a cross-section view of yet another example of a triple-zone head 4100" and a lower tool that are constructed according to the principles of the disclosure. Further to the description provided above with regard to FIGS. 20 - 24, the channel configuration of the lower tool body may differ from that of the lower tool body shown in FIG. 24 in that it may further include a gas plate 4121, which may be sandwiched between the sealing module body 4110 and the carrier 4120"'. Seal 4128' may be placed between the sealing module body 4110 and a first surface of the gas plate 4121 to provide a substantially air-tight seal. Seals 4128 may be placed between a second surface of the gas plate 4121 and the carrier 4120'" to provide a substantially air-tight seal.

As seen in FIG. 25, the 90° elbows of the channels 4192'" and 4198'" may be provided in the gas plate 4121. For example, the gas plate 4121 may be machined from one side to provide channels with optimal gas flow. The carrier 4120'" may not include any portion of the channels 4192'" or 4198'". The gas plate 4121 may be affixed to the carrier 4120'" by means of, for example, bolts, screws, pins, nuts, or the like. The channel configuration shown in FIG. 25 may be practical where it is difficult or impossible to machine channels in the carrier 4120'" due to, for example, space or tool restrictions, or where it may be desirable to alter the channel configuration proximate the container cavity 4144. Furthermore, this channel configuration offers the advantage of easy disassembly (or assembly) and removal (or replacement) of the gas plate 4121 for cleaning purposes, such as, for cleaning of the portions of the channels 4192'" and 4198"' in the gas plate 4121.

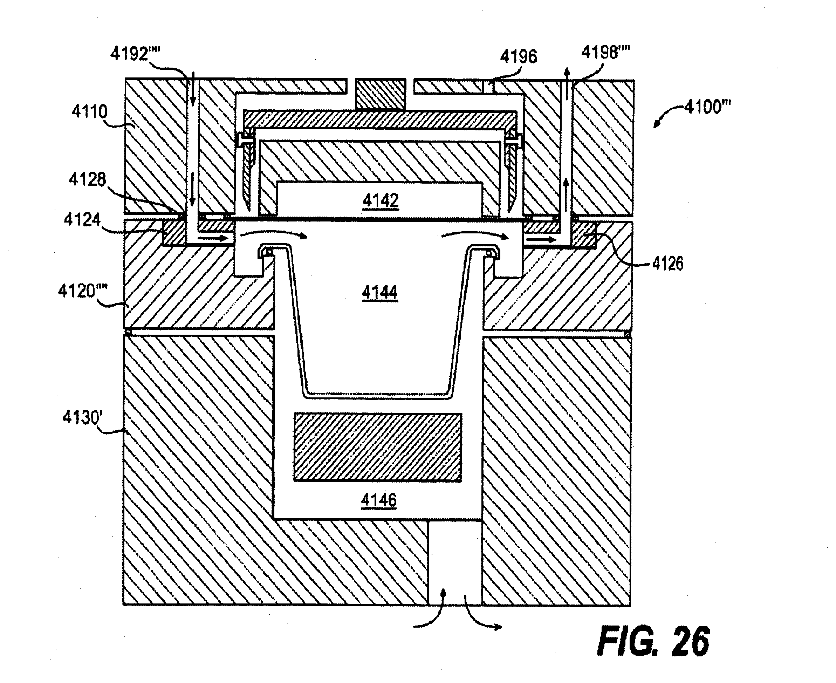

FIG. 26 shows a cross-section view of still further example of a triple-zone head 4100'" and the lower tool body constructed according to the principles of the disclosure. Further to the description provided above with regard to FIGS. 20 - 25, the channel configuration of the lower tool body may differ from that shown, for example, in FIG. 24, in that it may further include a carrier insert 4124, which may be placed in a complementary carrier recess 4126 provided in the carrier 4120"". The carrier insert 4124 may be removed from the carrier recess 4126 and the portions of the channels 4192"" and 4198"" cleaned before replacement, or the carrier insert 4124 may be replaced with another carrier insert 4124, where the carrier insert 4124 has been damaged or a different channel configuration is desired for the portions of the channels 4192"" and 4198"" in the carrier insert 4124.

The carrier insert 4124 may be fastened or interlocked to the carrier 4120"" to help maintain the position of the carrier insert 4124 in the carrier recess 4126 during operation of the head 4100"'. The carrier insert 4124 may be fastened to or interlocked with the carrier 4120"" by means of, for example, an adhesive, a tongue-and-groove coupling, or the like. The carrier insert 4124 may be made from a material such as, for example, a metal, a plastic, a rubber, or the like, or a combination of the foregoing. Further, the material may include an elastic material, such as, for example, silicone, or similar material, to enable the carrier insert 4124 to function as a seal and thereby prevent gas from escaping to the outside of the container cavity 4144.

It is noted that the sealer 4140 and/or cutter 4150 may be driven by the piston 4160, or any other mechanism capable of driving the sealer 4140 and/or cutter 4150, including, for example, a servomotor, a linear actuator, a linear motor, a pneumatic actuator, or the like.

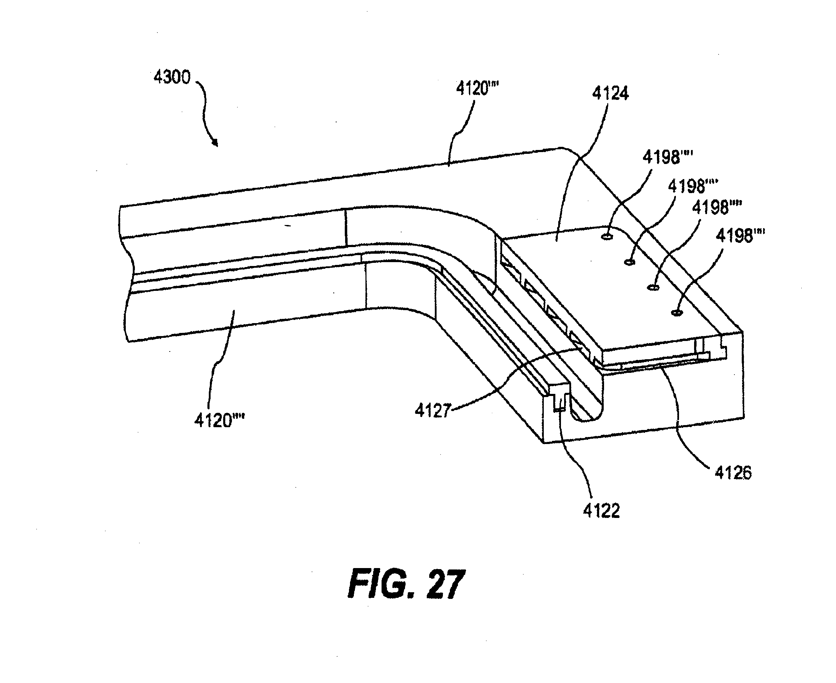

FIG. 27 shows a perspective partial view of an example of the lower tool 4300, constructed according to the principles of the disclosure. As seen in FIG. 27, the carrier insert 4124 may include a plurality of channel portions 4198"" and a corresponding plurality of inlet/outlet ports 4127.

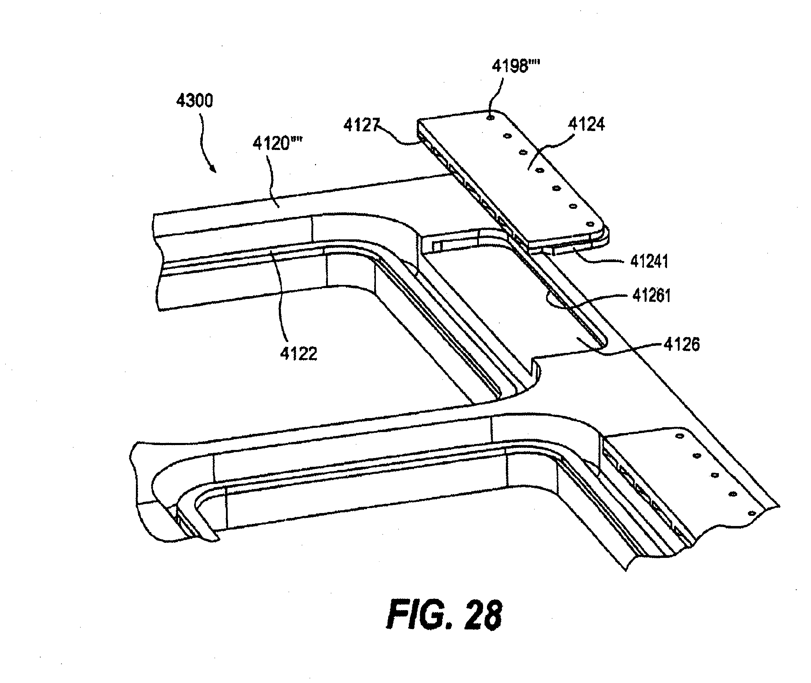

FIG. 28 shows a perspective exploded partial view of the example of the lower tool 4300. The carrier insert 4124 may be provided with a tongue portion 41241 and the carrier recess 4126 may be provided with a complementary groove 41261, which is configured to receive the tongue portion 41241.

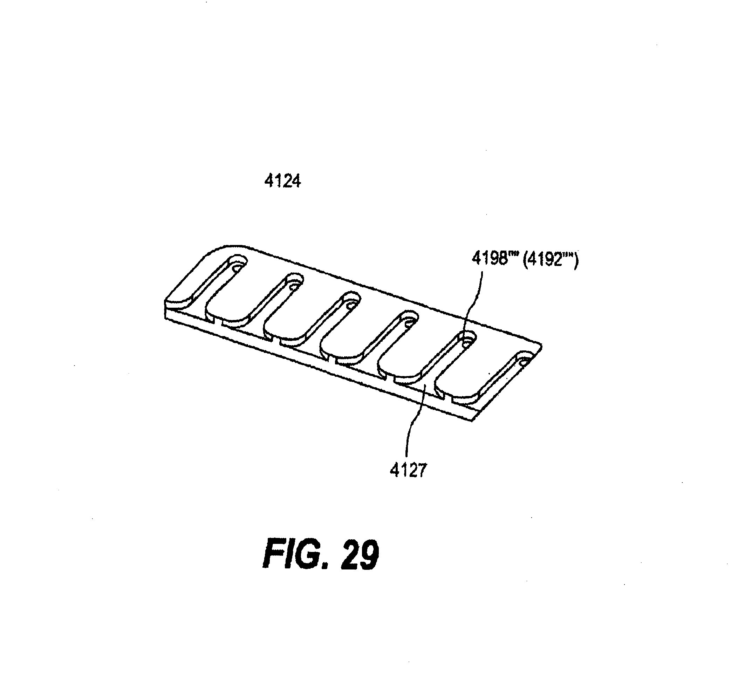

FIG. 29 shows a perspective partial underside view of an example of the carrier insert 4124, constructed according to the principles of the disclosure. It is noted that the cross-section of the area of the outlet and inlet ports may vary. For example, the carrier insert 4124 on the gas injection side may have smaller channels 4127 than the channels 4127 on the gas vacuuming side of the carrier insert 4124. In this regard, a venturi effect may be created, causing the gas to increase speed while flowing above the product in the container 250. A higher flow speed of the gas will result in lower pressure of the gas stream, which would assist in removing the air at the bottom of the container 250 and therefore speed up the "MAP" process.

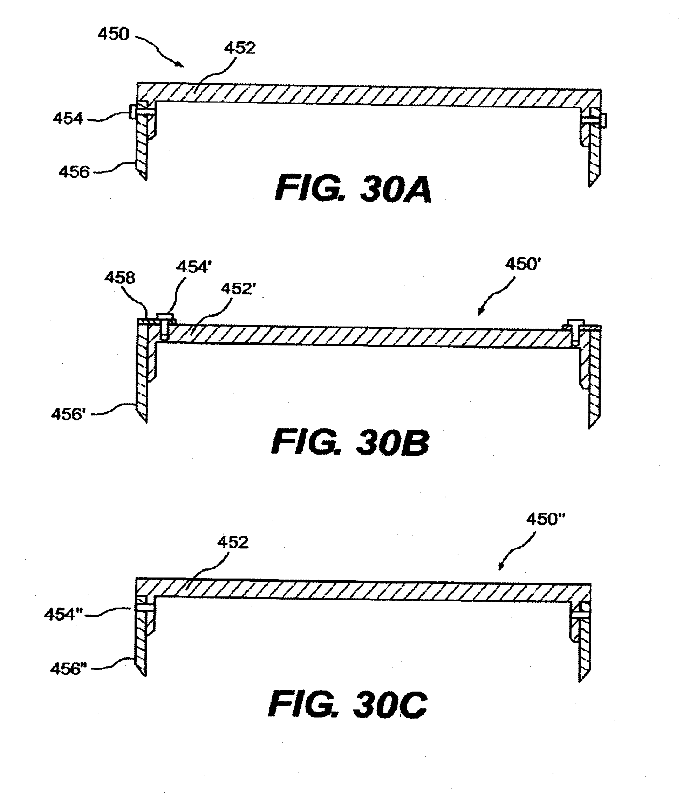

FIGS. 30A - 30C show various examples of existing, state-of-the-art cutting blade assemblies 450, 450', 450", respectively, any of which may be used in the upper tool 3100 (shown in FIG. 18A).

Referring FIG. 30A, the cutting blade assembly 450 includes a mounting base 452, at least one piece of blade 456 and bolts 454 for securing the blade(s) 456 to the mounting base 452.

Referring FIG. 30B, the cutting blade 450' includes a mounting base 452', at least one piece of blade 456', bolts 454', and mounting tabs 458. The mounting tabs 458 are a part of, or attached to the blades 456'. The mounting tabs 458 are attached to the mounting base 452' by means of the bolts 454'.

Referring to FIG. 30C, the cutting blade 450" includes the mounting base 452, at least one piece of blade 456", and a pair of set-screws 454" for securing the blades 456" to the mounting base 452.

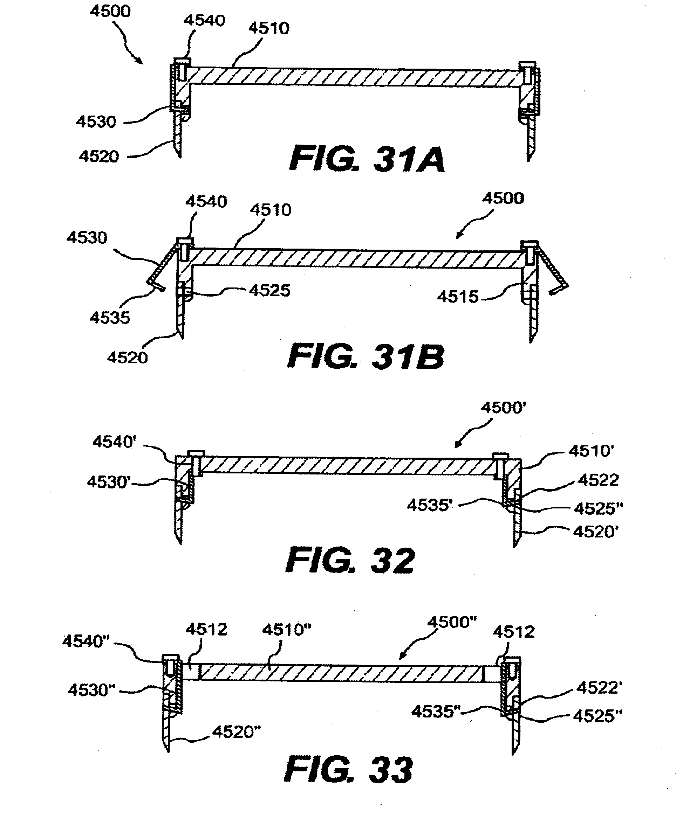

FIGS. 31A- 31B show two views of an example of a cutting blade assembly 4500, constructed according to the principles of the disclosure. Referring to FIG. 31A, the cutting blade assembly 4500 may include a mounting base 4510, a blade 4520, a blade clip 4530, and a fastener 4540. The fastener 4540 may include, for example, a bolt, a pin, a set-screw, a nut, or the like. One end of the blade clip 4530 may be secured to the mounting base 4510 by means of the fastener 4540. The other end 4535 of the blade clip 4530 may be inserted into an opening 4525 of the corresponding blade 4520.

FIG. 31B shows an example where a pair of blade clip ends 4535 are removed from the openings 4525 in the blade 4520, thereby releasing the blade 4520 for removal from the cutting blade assembly 4500. The blade clip ends 4535 may be configured to fit into and through the openings 4525 to engage and fasten to the mounting base portions 4515 of the mounting base 4510. The blade clips 4530 may be manufactured from, for example, sheet metal with spring-like properties, or from a variety of materials, such as, for example plastic, metal, or the like. The blade clips 4530 may be pulled from the openings 4525 without removing the fastener 4540.

FIG. 32 shows another example of a cutting blade assembly 4500' constructed according to the principles of the disclosure. The cutting blade assembly 4500' may include a mounting base 4510', a blade 4520', a blade clip 4530', and a fastener 4540'. The fastener 4540' may include, for example, a bolt, a pin, a set-screw, a nut, or the like. One end of the blade clip 4530' may be secured to the mounting base 4510' by means of the fastener 4540'. The other end 4535' of the blade clip 4530' may be inserted into and through the opening 4525' to engage and fasten to the blade portion 4522 of the blade 4520'.

FIG. 33 shows yet another example of a cutting blade assembly 4500" constructed according to the principles of the disclosure. The cutting blade assembly 4500" may include a mounting base 4510", a blade 4520", a blade clip 4530", and a fastener 4540". The fastener 4540" may include, for example, a bolt, a pin, a set-screw, a nut, or the like. One end of the blade clip 4530" may be inserted into and through an opening 4512 of the mounting base 4510" and secured to the mounting based 4510" by means of the fastener 4540". The other end 4535" of the blade clip 4530" may be inserted into and through the opening 4525" to engage and fasten to the blade portion 4522' of the blade 4520".

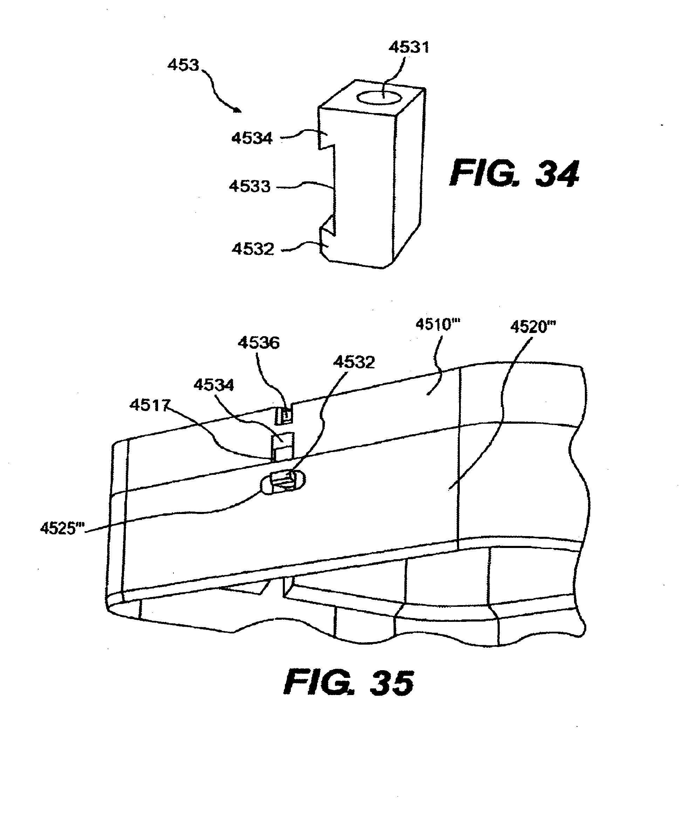

FIG. 34 shows an example of a blade clip 453 constructed according to principles of the disclosure. The blade clip 453 may have an elongated rod-like configuration. The blade clip 453 may include a mounting hole 4531, a mounting base engagement portion 4534 and a blade engagement portion 4532. The mounting hole 4531 may be configured to receive a fastener 4536 (shown in FIG. 35), such as, for example, a bolt, a screw, a pin, or the like. The mounting base engagement portion 4534 and the blade engagement portion 4532 may form a recess 4533 therebetween.

FIG. 35 shows a perspective partial view of an example of a blade 4520'" fastened to a mounting base 4510'" by means of one or more of the blade clips 453, according to principles of the disclosure. The mounting base 4510'" may include an opening 4517 for receiving and engaging the mounting base portion 4534, and the blade 4520'" may include an opening 4525'" for receiving and engaging the blade engagement portion 4532 of the blade clip 453. The blade clip 453 may be secured in position by the fastener 4536.

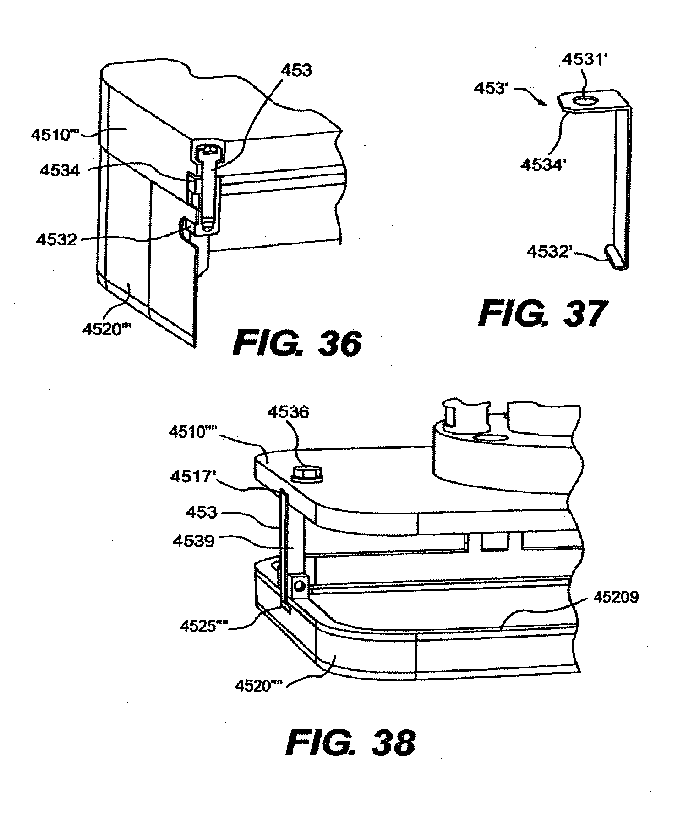

FIG. 36 shows a partial cross-section view of the blade 4520'" fastened to the mounting base 4510'" by means of the blade clip 453, including a cross-section view of the blade clip 453.

FIG. 37 shows another example of a blade clip 453' constructed according to principles of the disclosure. The blade clip 453' may have a generally planar shape. The blade clip 453' may include an opening 4531', a mounting base engagement portion 4534' and a blade engagement portion 4532'. The opening 4531' may be configured to receive a fastener 4536' (shown in FIG. 38), such as, for example, a bolt, a screw, a pin, or the like.

FIG. 38 shows a perspective partial view of another example of a blade 4520"" fastened to a mounting base 4510"" by means of a bridge, which includes one or more of the blade clips 453' and a mounting base leg 4539, according to the principles of the disclosure. The mounting base 4510"" may include an opening 4517' for receiving and engaging the mounting base portion 4534', and the blade 4520"" may include an opening 4525"" for receiving and engaging the blade engagement portion 4532' of the blade clip 453'. The blade clip 453' may be affixed to the mounting base leg 4539, which may affixed to the mounting base 4510"" at an upper portion and a blade support frame 45209 on a lower portion. The blade 4520"" may be attached to and supported by the blade support frame 45209. The blade clip 453' may be secured in position by the fastener 4536. The mounting base leg 4539 may also be secured in position by the fastener 4536.

It is noted that the mounting leg 4539 may be left out. The mounting leg 4539 is not needed for the blade clip 453 to function. The blade 4520"" may be attached directly to the mounting base 4510"".

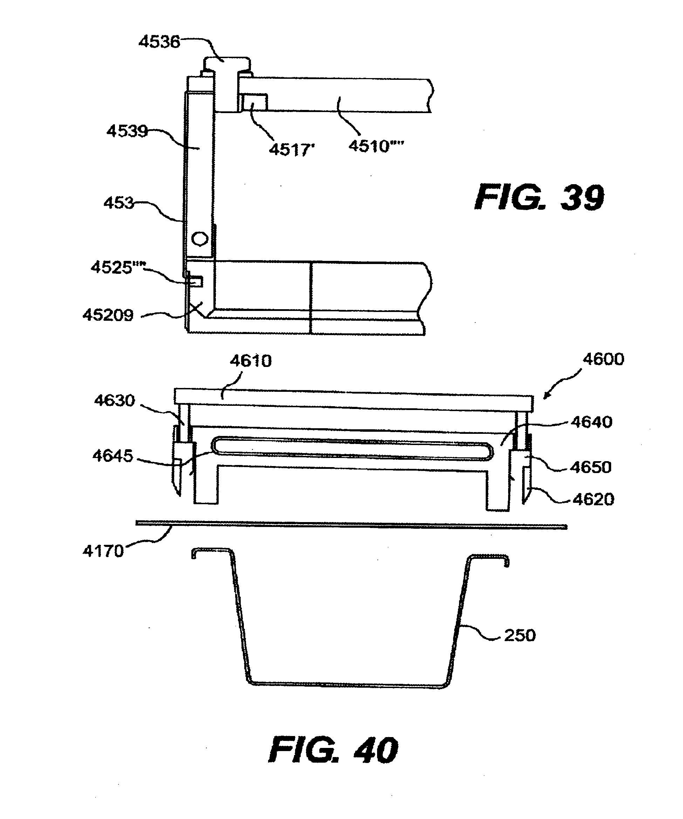

FIG. 39 shows a partial cross-section view of the mounting base 4510"" fastened to the blade support frame 45209 by means of the blade clip 453, including a cross-section view of the blade clip 453.

FIG. 40 shows an example of a cutting/sealing assembly 4600 that is constructed according to the principles of the disclosure. The cutting/sealing assembly 4600 is shown in a pre-cut, pre-seal position, before the heat-seal die 4640 or the blade 4620 have engaged the lidding 4170. The cutting/sealing assembly 4600 may include a mounting base 4610, a blade 4620, a bridge 4630, and a heat-seal die 4640. The heat-seal die 4640 may include an imbedded heater element 4645. The cutting/sealing assembly 4600 may include a blade support frame 4650 that is configured to hold the blade 4620. The cutting/sealing assembly 4600 may be used in operations where the lidding 4170 is not, for example, a "Pre-die cut lid", but a lidding that is unwound from, for example, a roll and should be trimmed along outer contours of the container 250. The blade 4620 may be configured to the contours of the container 250.

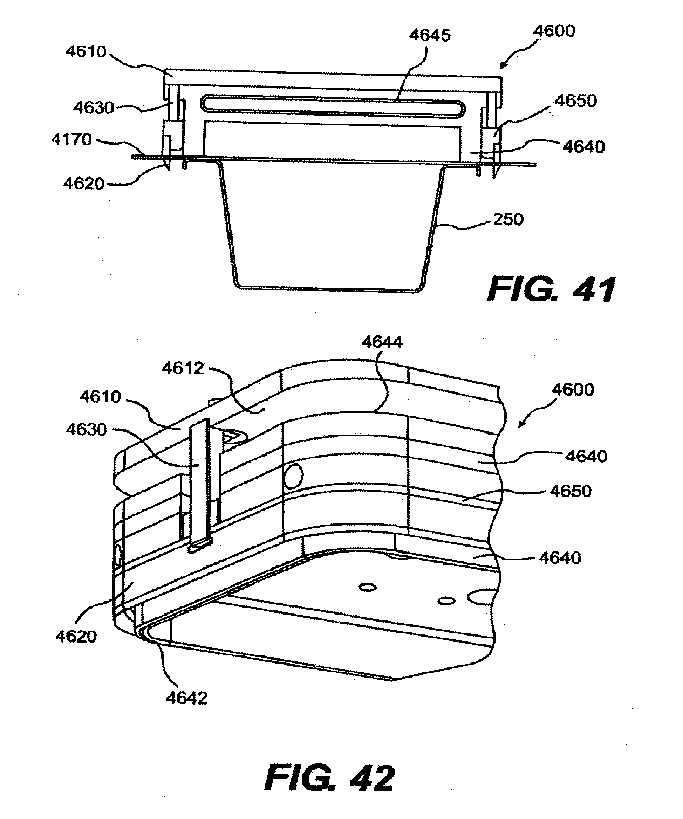

FIG. 41 shows an example of the cutting/sealing assembly 4600 in the seal-cut position, after the heat-seal die 4640 and the blade 4620 have engaged the lidding 4170.

FIG. 42 shows a partial three-dimensional perspective view of an example of the cutting/sealing assembly 4600, which is constructed according to the principles of the disclosure. The heat-seal die 4640 is shown in this figure in a seal, pre-cut (or post-cut) configuration, where an engaging portion 4642 of the heat-seal die 4640 extends below the blade 4620 to engage and heat the lidding 4170, thereby causing the lidding 4170 to adhere to and hermetically seal the contents of the container 250.

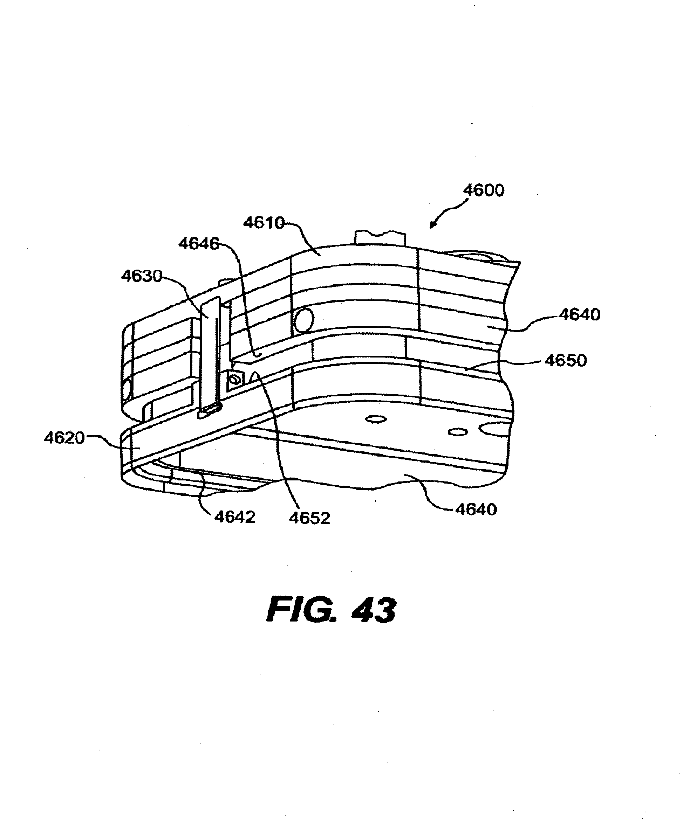

The mounting base 4610 may include a substantially planar surface 4612, and the heat-seal die 4640 may include, for example, substantially planar surfaces 4644 and 4646 (shown in FIG. 43). Alternatively, non-planar surfaces 4612, 4644, 4646 may be used. In the cut position (shown in FIG. 43), when the blade 4620 is completely extended as seen in the figure, the heat-seal die assembly surface 4644 may contact the mounting base surface 4612 to ensure that no gaps exist between the mounting base surface 4612 and the heat-seal die assembly surface 4644. The heat-seal die assembly surface 4644 may include, for example, a material that is a poor heat conductor to minimize the transfer of heat from the heat-seal die 4640 to the mounting base 4610. The bridges 4630 may also be made from a good thermo-insulating material to minimize the transfer of heat from the blade support frame 4650 to the mounting base 4610.

Further, the heat-seal die 4640 may include, for example, the substantially planar surface 4646, and the blade support frame 4650 may include, for example, a substantially planar surface 4652. In the pre-cut position (shown in FIG. 42), when the blade 4620 is completely retracted as seen in the figure, the heat-seal die surface 4646 may contact the blade support surface 4652 to ensure that no gaps exist between the blade support surface 4652 and the heat-seal die surface 4646. The blade support frame 4650 and the blade 4620 may be made from materials that have good heat conductive characteristics to ensure rapid heating of the blades 4620 when the blade support surface 4652 contacts the heat-seal die surface 4646. Furthermore, the blade support frame 4650 may be configured to be as small as possible to maximize the efficiency of transfer of heat from heat-seal die 4640 to the blade 4620. Thus, the blade 4620 may be heated by the heat-seal die 4640 while resting in the pre-cut position (shown in FIG. 42), so as to provide a hot-cut of the lidding 4170. In this regard, the blade 4620 may receive heat from the heat-seal die 4640 through the blade support frame 4650, as well as heat received directly from the heat-seal die 4640 by the proximity of the heated engaging portion 4642 to the blade 4620.

The contact between the blade support surface 4652 and heat-seal die surface 4646, as well as the contact between the mounting base surface 4612 and heat-seal die assembly surface 4644, may be facilitated or carried out using mechanical components (not shown), pneumatic components (not shown), hydraulic components (not shown), electromechanical components (not shown), or the like, as known in the relevant arts.

FIG. 43 shows a partial three-dimensional perspective view of the cutting/sealing assembly 4600 of FIG. 42 configured in a post-seal, cut configuration, where the heat-seal die 4640 is retracted and the blade 4620 is extended to engage and cut the lidding 4170. The cutting/sealing assembly 4600 may be used in operations where the lidding 4170 is not, for example, a "Pre-die cut lid", but a lidding that is unwound from, for example, a roll and should be trimmed along outer contours of the container 250.

Referring to FIGS. 40 - 43, the heat-seal die 4640, including the imbedded heater element 4645, may be connected to and powered by a remote power source (not shown), which may be located, for example, on the docking station 3120 (shown in FIG. 18A). The power source may include an electrical power source, which may supply power to multiple cutting assemblies provided in the sealing modules 3110 (shown in FIG. 18A).

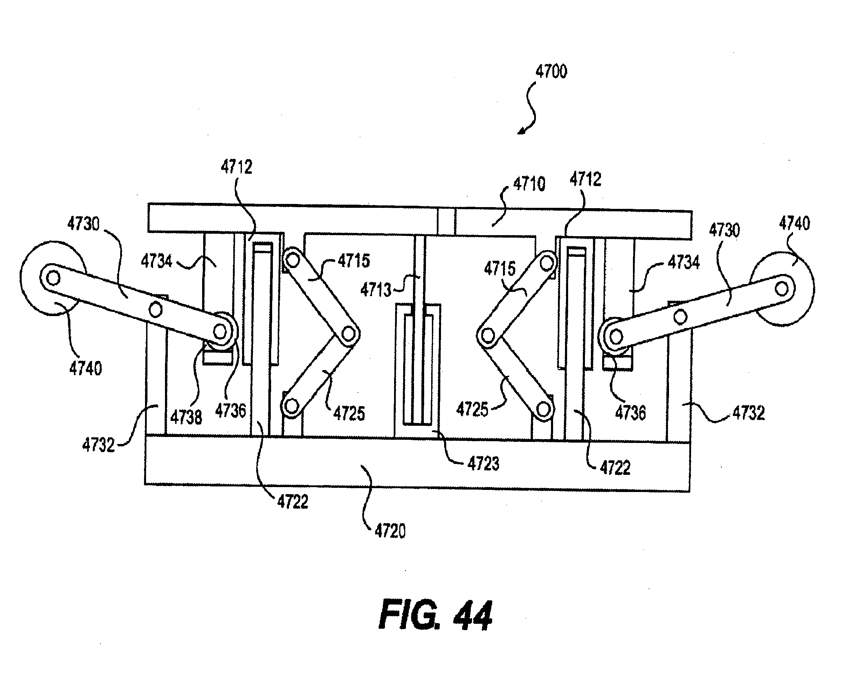

FIG. 44 shows an example of a lift 4700 that is constructed according to the principles of the disclosure. The lift 4700 may include a top lift member 4710, a base lift member 4720, a weight lever 4730 and a weight 4740. The lift 4700 may further include a plurality of linear guides (or actuators) 4712, 4723, a plurality of shafts 4722, 4713, a top scissor member 4715, a base scissor member 4725, a weight support member 4732, a weight guide member 4734, and a weight lever guide 4736. The weight lever guide 4736 may include, for example, a cam roller (shown in FIG. 44), a rod, or the like, that is positioned in a guide 4738 of the weight guide member 4734, where the guide 4738 may include, for example, a groove, a bearing, or the like. The weight support member 4732 may include, for example, a column that is pivotally affixed to the weight lever 4730. The weight support member 4732 may include, for example, bearings to reduce the friction experienced by the weight lever 4730 while pivoting on the weight support member 4732. The linear guides 4712, 4723 may include, for example, electromagnetic actuators that cause the shafts 4722, 4713, respectively, to move up or down the longitudinal axis of the guides 4712, 4723. Alternatively (or additionally), the scissor members 4715, 4725 may be coupled to, for example, a motor shaft, a gear box, or the like, to drive the scissor members 4715, 4725 to expand or contract. The shaft 4722 may be configured as a linear shaft and the linear guide 4712 may be configured as a linear bearing, or the like.

As seen in FIG. 44, the lift 4700 may include counterweights 4740 on either side of the lift 4700. The mass of the counterweights 4740 may be matched to the mass that is to be lifted by, for example, the top lift member 4710. While two counterweights 4740 are shown in FIG. 44, the number of counterweights and their location in the lift 4700 may vary, as recognized by those having ordinary skill in the art. Further, the mass of the counterweights 4740 may depend on the length of the weight lever 4730 used and the point at which the weight lever 4730 is pivotally affixed to the weight support member 4732.

For instance, in the example shown in FIG. 44, the weight lever 4730 is pivotally affixed to the weight support member 4732 to provide about a 1:2 lever ratio, thereby cutting down the mass of the counterweight 4740 by about one-half. For example, if a total mass to be lifted is about 400 lbs and the lever ratio is about 1:1, then each of a pair of counterweights 4740 should be about 200 lbs. However, if a 1:2 lever ratio is used, then each of the pair of counterweights 4740 should be about 100 lbs to counterbalance the 400 lb mass to be lifted.

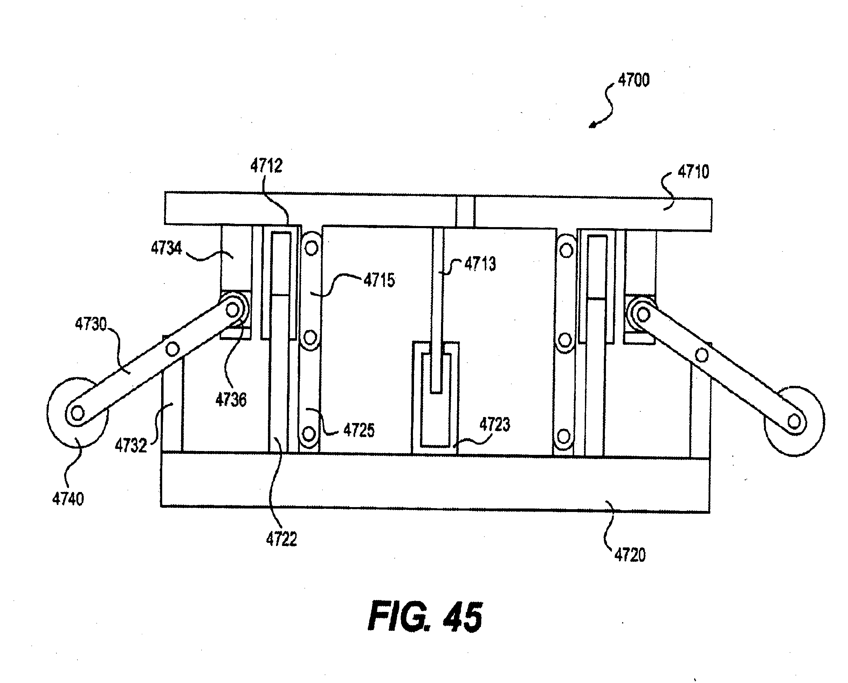

FIG. 45 shows the lift 4700 in a full-lift position, where the scissor members 4715, 4725 are substantially fully extended. The scissor members 4715, 4725 may be locked in the upper position by a locking mechanism (not shown).

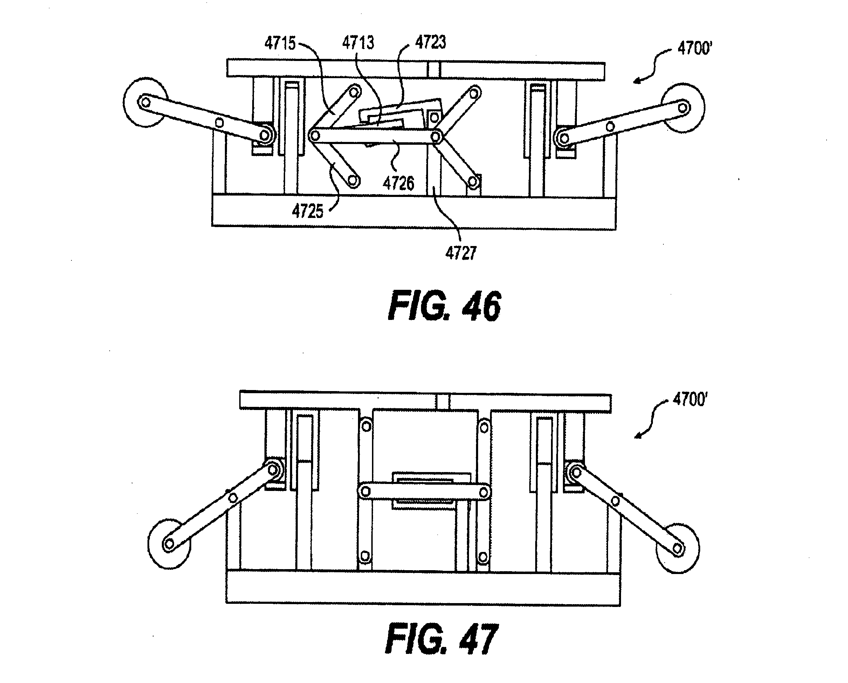

FIG. 46 shows another example of a lift 4700' that is constructed according to the principles of the disclosure. As seen, the lift 4700' may include a scissor linkage 4726 that links a first pair of scissor members 4715, 4725 to a second pair of scissor members 4715, 4725. One end of the scissor linkage 4726 may be pivotally coupled to an end of the shaft 4713. The linear guide 4723 may be pivotally coupled to a guide support 4727. It is noted that the guide support 4727 may be attached to the top lift member 4710 or the base lift member 4720.

FIG. 47 shows the lift 4700' in a full-lift position, where the scissor members 4715, 4725 are substantially fully extended. The scissor members 4715, 4725 may be locked in the upper position by a locking mechanism (not shown).

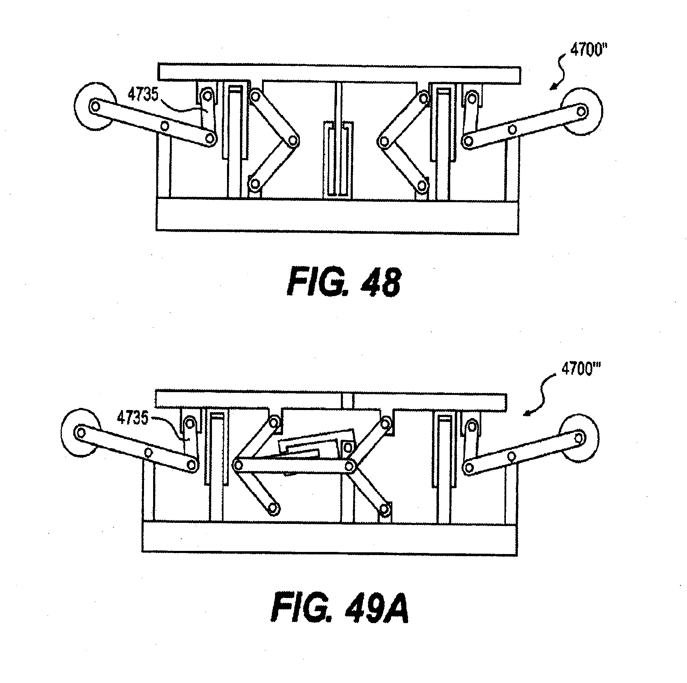

FIG. 48 shows yet another example of a lift 4700" that is constructed according to the principles of the disclosure. Further to the description provided above with regard to FIG. 44, the lift 4700" may include a pivot member 4735 instead of the weight guide member 4734 and the weight lever guide 4736.

FIG. 49A shows still a further example of a lift 4700'" that is constructed according to the principles of the disclosure. Further to the description provided above with regard to FIG. 46, the lift 4700'" may include the pivot member 4735 instead of the weight guide member 4734 and the weight lever guide 4736.

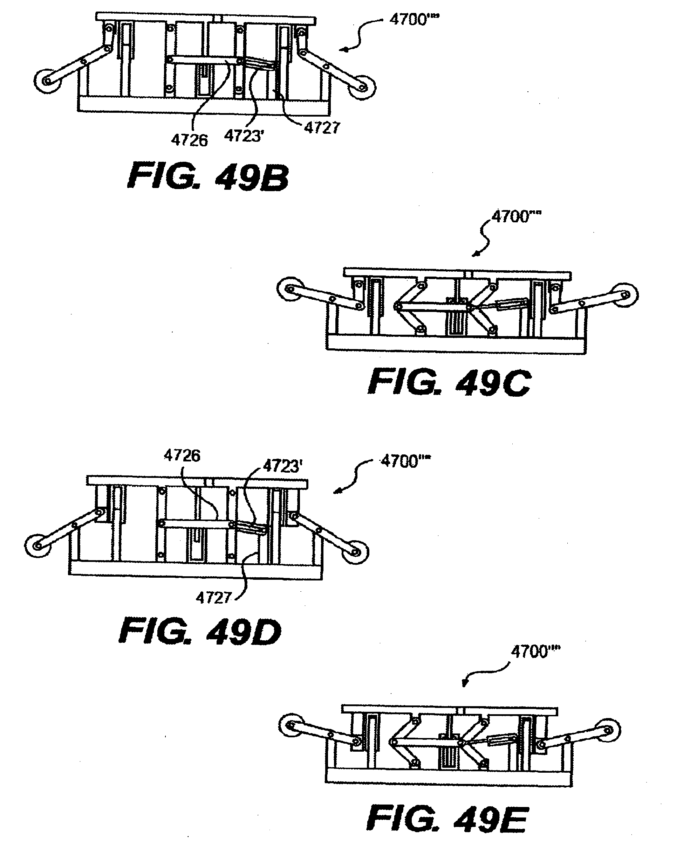

FIG. 49B shows still a further example of a lift 4700"" that is constructed according to the principles of the disclosure. The lift 4700"" is shown in the lift position. Further to the description provided above with regard to FIGS. 45 and 48, the lift 4700"" may include the scissor linkage 4726, the linear guide 4723 and the guide support 4727. FIG. 49C shows the lift 4700"" in the lowered position.

FIG. 49D shows still a further example of a lift 4700"'" that is constructed according to the principles of the disclosure. The lift 4700"'" is shown in the lift position. Further to the description provided above with regard to FIG. 45, the lift 4700'"" may include the scissor linkage 4726, a locking and releasing actuator 4723' and the guide support 4727. FIG. 49E shows the lift 4700'"" in the lowered position.

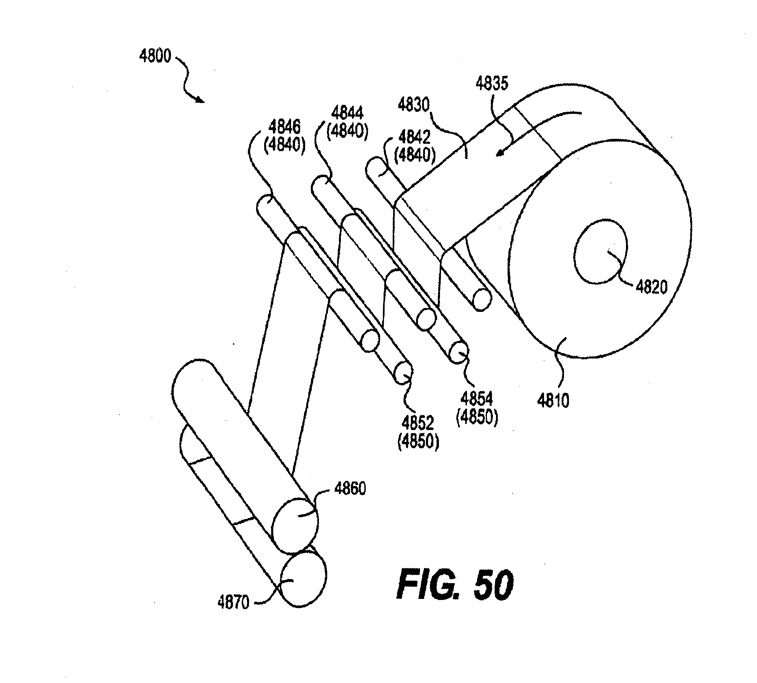

FIG. 50 shows a perspective view of an example of a lidding unwind system 4800 that is constructed according to the principles of the disclosure. The lidding unwind system 4800 includes a lidding roll 4810 mounted to a lidding unwind mandrel (not shown), which may protrude through the lidding roll core 4820. Alternatively, the lidding roll 4810 may be placed atop a plurality of cradle rollers (not shown). The lidding roll 4810 is wound with a lidding 4830 that may be unwound in, for example, a direction 4835. In this regard, the lidding unwind mandrel (or plurality of cradle rollers) may be driven so as to spin a predetermined number of revolutions, depending on the lidding length needed, and supply the lidding 4830 to, for example, a sealing assembly (not shown) to seal a plurality of containers 250.

The lidding unwind system 4800 further includes a plurality of free rotating upper rollers 4840 (including upper rollers 4842, 4844, 4846), a plurality of free rotating dancer rollers 4850 (including dancer rollers 4852, 4854), a driven free feeding roller 4860, and a pincher roller 4870. The feeding roller 4860 and the pincher roller 4870 may function together as a pair of feeding rollers 4860, 4870. An apparatus for sealing a container 250, such as, for example, the container sealer 30 (shown in FIG. 1), may require a predetermined length of the lidding 4830 for operation. The feeding roller 4860 may be coupled to a driver (not shown), such as, for example, a motor, to draw the lidding 4830 from the upper rollers 4840 and the dancer rollers 4850.

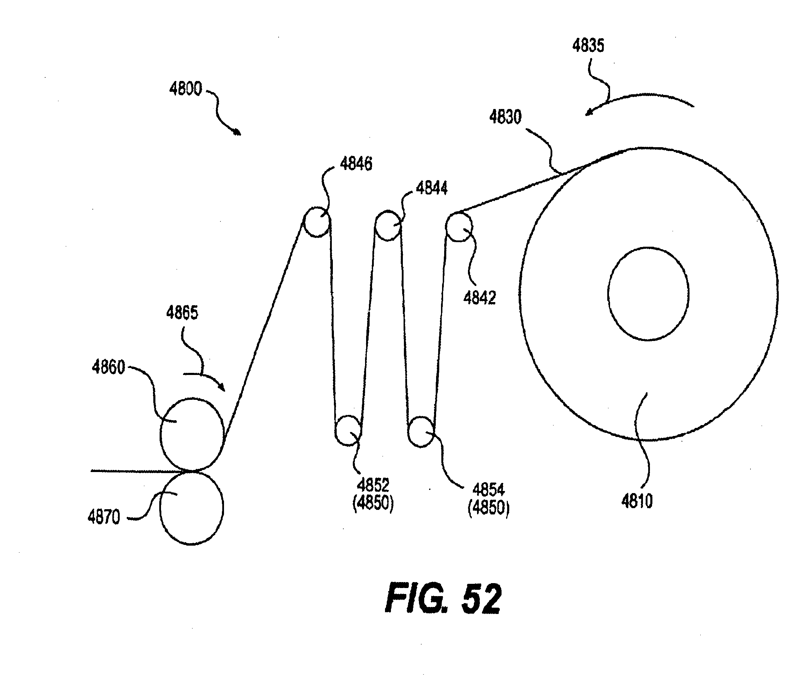

The upper rollers 4840 and the dancer rollers 4850 are configured to function as a buffer between the lidding roll 4810 and the feeding rollers 4860, 4870, to store a predetermined length of lidding 4830. In particular, the dancer rollers 4850 may be configured to freely move with gravity or to be actively driven, moving downwards (as shown in FIG. 50) with the unwinding lidding 4830 under light tension until the dancer rollers 4850 reach a predetermined lower end position (shown in FIG. 52), thereby storing a predetermined length of lidding 4830 between the dancer rollers 4850 and the upper rollers 4840. Thus, dancer rollers 4850 function to buffer differences in the rate of unwinding of the lidding 4830 from the lidding roller 4810 with respect to the rate of lidding 4830 required by the apparatus, with the dancer rollers 4850 moving downward when the unwind speed of the lidding roller 4810 is great than the in-feed speed of the lidding 4830 fed into the apparatus, and the dancer rollers 4850 moving upward when the unwind speed of the lidding roller 4810 is less than the in-feed speed of the lidding 4830 fed into the apparatus.

During operation, the feeding rollers 4860 and 4870 may turn and feed the lidding 4830 into the apparatus after the length of lidding 4830 that is needed is generated by the dancer rollers 4850. The buffering of the lidding 4830 may take place while the apparatus is sealing the containers 250 and the feeding roller 4860 is standing still. Should the machine cycle of the apparatus be short, the lidding 4830 may be buffered while the feeding roller 4860 feeds the lidding 4830 to the container sealer, as described above.

The lidding unwind system 4800 may further include a dancer roller position sensor (not shown) that may be configured to sense when the dancer rollers 4850 reach the predetermined lower end position. The dancer roller position sensor also may be configured to sense when the dancer rollers 4850 are in an uppermost position. The dancer roller position sensor may be coupled to a lidding feed controller (not shown) via a communication link. The lidding feed controller may be configured to stop the lidding roller 4810 from supplying additional lidding 4830 when the dancer rollers 4850 reach the predetermined lower end position, or start the lidding roller 4810 to supply additional lidding 4830 when the dancer rollers 4850 reach the uppermost position. The lidding feed controller may include a computer. Further, the lidding feed controller may be separate from, or integral with the in-feed controller.

The example of the lidding unwind system 4800 shown in FIG. 50 includes a pair of dancer rollers 4852, 4854. It is noted, however, that the lidding unwind system 4800 may include more than two dancer rollers 4850 to provide additional buffering capacity for the lidding 4830.

It is known in the art to use a single dancer roller moving vertically or horizontally, or a pair of rollers mounted on a single pivoting lever that are configured to move in an arc. For example, the INPACK S Series Tray Sealers™ made by Ross® Industries, Inc., includes a single dancer roller. However, a single dancer roller can only buffer half of the length of the lidding 4830 as compared to the dual dancer rollers 4852, 4854 for the same length of travel of the dancer rollers. Furthermore, the single dancer roller would have to move at twice the speed of the dual dancer rollers 4852, 4854 to provide the same length of lidding 4830 to the apparatus, thereby increasing a likelihood of overstretching or tearing of the lidding 4830.

The dancer rollers 4850 (e.g., 4852, 4854) may be connected together and guided in a substantially vertical direction in order to ensure substantially simultaneous sinking and rising of the dancer rollers 4850. Alternatively, the dancer rollers 4850 may be independent from each other. The dancer rollers 4850 may be guided by means of, for example, linear bearings (not shown), gears and racks (not shown), guide rollers or cams (not shown), guide blocks (not shown), linear actuators (not shown), or the like. It is noted that any number greater than or equal to two dancer rollers 4850 may be used, depending on the desired buffering capacity for the lidding 4830 and available space for travel of the dancer rollers 4850.

Although the lidding unwind system 4800 is disclosed as a supply source for the lidding 4830 used by an apparatus, such as, for example, the container sealer 30 (shown in FIG. 1), it is noted that substantially the same system 4800 may be used to rewind (or take up) used up lidding 4830 from the apparatus, except that the direction of movement of the used up lidding 4830 would be in a direction that is opposite to the direction 4835 (shown in FIG. 50). The rewind dancer assembly (not shown) may optionally leave out the driven feeding roller 4860 and the pincher roller 4870.

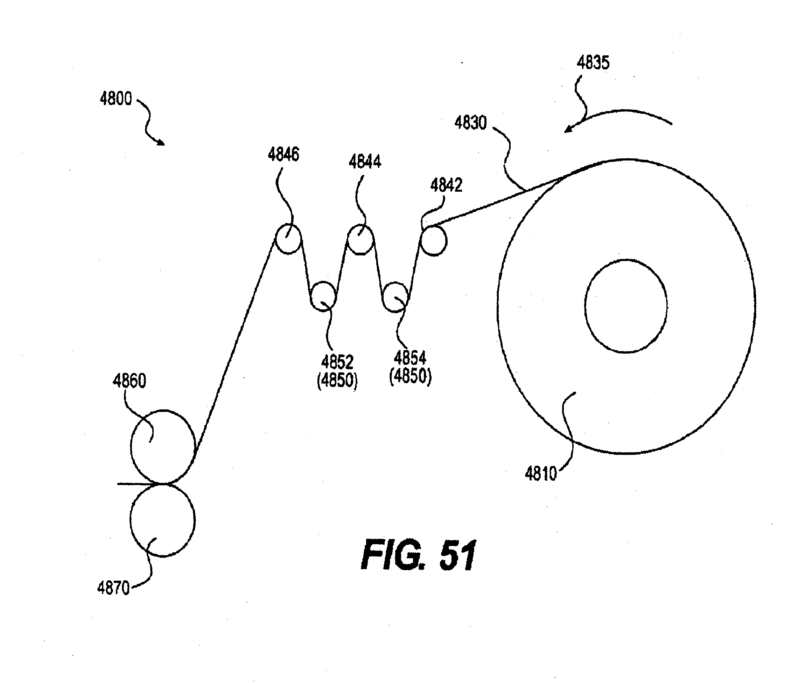

FIG. 51 shows a side view of the lidding unwind system 4800 with the dancer rollers 4850 located at an upper position, that is above the predetermined lower end position.

FIG. 52 shows a side view of the lidding unwind system 4800 with the dancer rollers 4850 located at the predetermined lower end position.

Referring to FIGS. 51 and 52, before the lidding 4830 is fed via the feeding rollers 4860, 4870, to the apparatus (e.g., the container sealer 30, shown in FIG. 1), the dancer rollers 4850 may be retracted (or lifted) to their upper position(s) (shown in FIG. 51), so that the dancer rollers 4850 will have capacity to store a predetermined length of the lidding 4830 between the dancer rollers 4850 and the upper rollers 4840. The lidding roller 4810 may be unwound until the dancer rollers 4850 reach the predetermined lower end position.

As soon as the feeding rollers 4860, 4870 start to pull the lidding 4830, with the feeding roller 4860 being driven in a direction 4635, the dancer rollers 4850 may start to move upward and the lidding roller 4810 may be controlled to increase its rotational speed in the direction 4835. When the dancer rollers 4850 move downward and reach the predetermined lower end position, the lidding roller 4810 may be controlled to stop or slow down its rotational speed in the direction 4835.

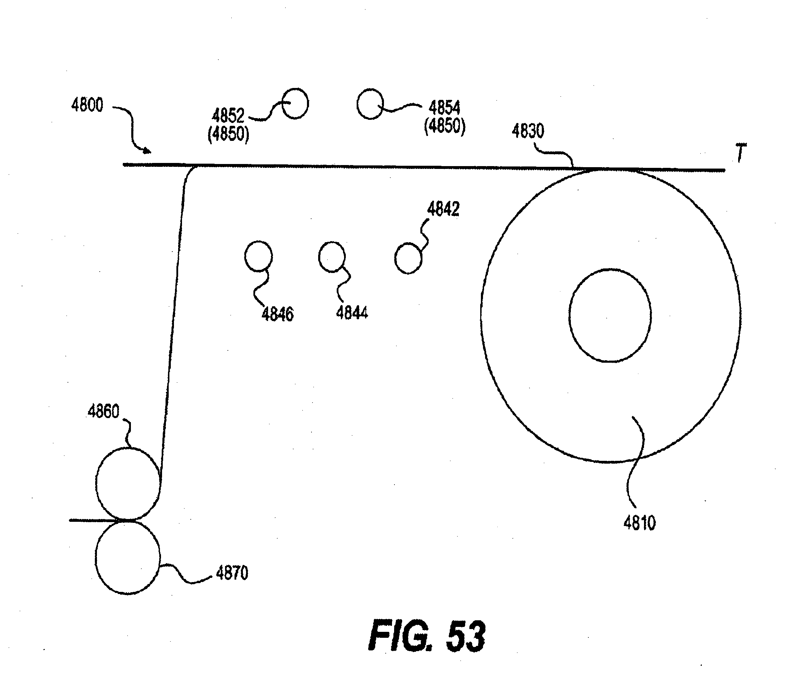

FIG. 53 shows a side view of the lidding unwind system 4800 with the upper rollers 4840 and the dancer rollers 4850 configured in a threading configuration. As seen in the figure, the upper rollers 4840 may be fixed while the dancer rollers 4850 may be configured to move above the threading axis *T,* to allow for the lidding 4830 to be drawn between the upper rollers 4840 and the dancer rollers 4850. The upper rollers 4840 may be configured as fixed rotating rollers that do not move up or down. The dancer rollers 4850 may be configured to be lifted above the upper rollers 4840. After a length of lidding 4830 is drawn from the lidding roll 4810 and fed into the feeding rollers 4860, 4870, the dancer rollers 4850 may be lowered below the upper rollers 4840.

According to an alternative embodiment of the lidding unwind system 4800, the upper rollers 4840 may be configured to move up or down.

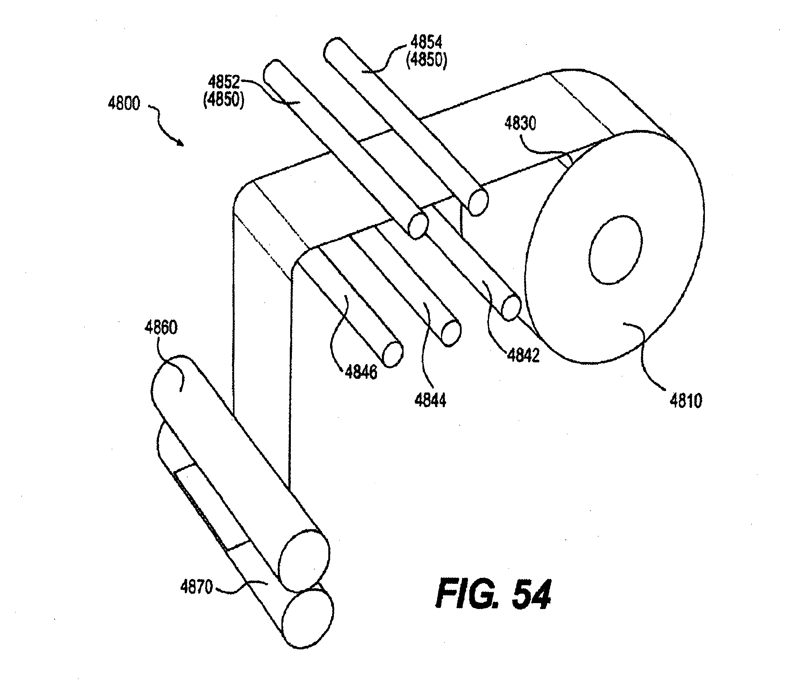

FIG. 54 shows a perspective view of the lidding system 4800 with the upper rollers 4840 and the dancer rollers 4850 configured in the threading configuration.

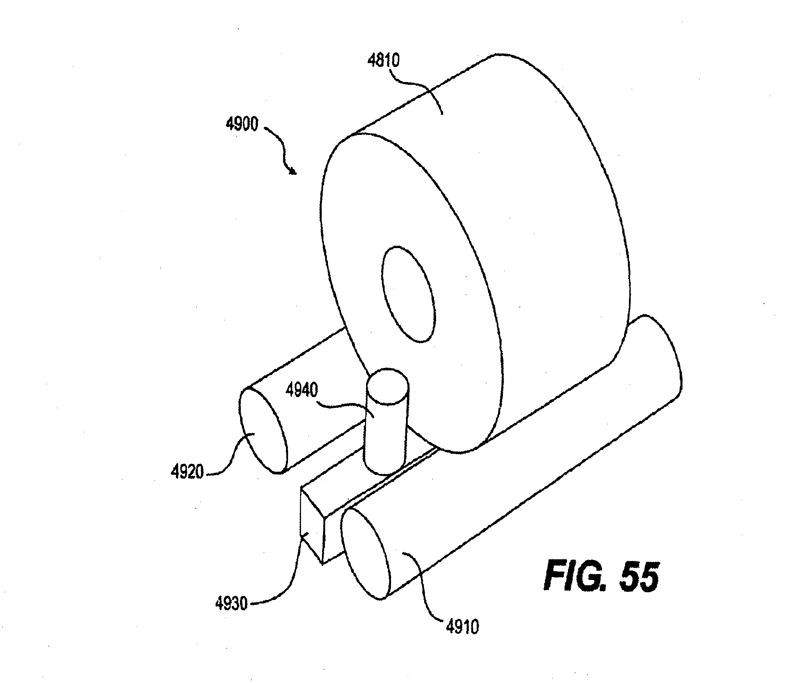

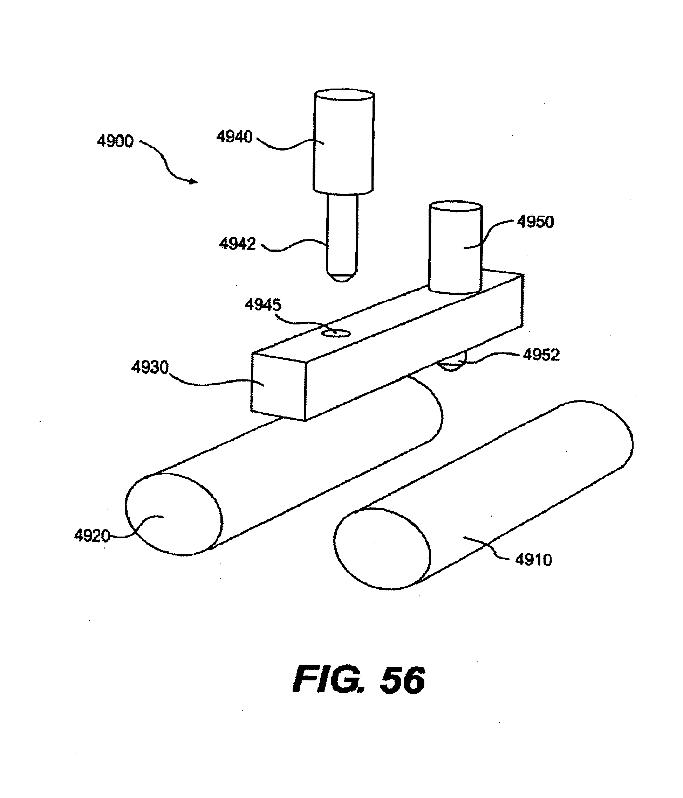

FIG. 55 shows an example of a lidding roll centering system 4900 that is constructed according to the principles of the disclosure. The lidding roll centering system 4900 may include a set of cradle rollers 4910, 4920, a common bar 4930, and a pair of guide rollers 4940, 4950 (shown in FIG. 56). The cradler roller 4910, 4920 may be part of the container sealer 30 (shown in FIG. 1). The guide rollers 4940, 4950 may be vertically aligned and rotationally affixed to the common bar 4930 so as to provide a desired space between the vertically oriented rollers 4940, 4950 for the lidding roll 4810 and to guide the lidding roll 4810 as it unwinds (or winds). Each of the guide rollers 4940, 4950 may be configured to rotate about its respective longitudinal axis without imposing any kind of negative resistance to the lidding roll 4810 as it spins. As seen in the figure, the guide rollers 4940, 4950 are configured to contact a side portion of the lidding roll 4810, and the contact area of the guide rollers 4940, 4950 is configured to move in substantially the same direction as the area on the lidding roll 4810 that is contacted by the guide roller 4940 (or 4950).

FIG. 56 shows an exploded view of the lidding roll centering system 4900. The common bar 4930 may include a pair of guide openings 4945 that are configured to receive and hold the guide rollers 4940, 4950. In particular, each of the guide rollers 4940, 4950 may have an engaging portion 4942, 4952, respectively that may be inserted into and held in place by the guide opening 4945. The guide openings 4945 may include, for example, bearings to minimize friction between the engaging portions 4942, 4952 and the common bar 4930.

Alternatively (or additionally), the engaging portions 4942, 4952 may be fixedly inserted into the guide openings 4945 (or affixed to the common bar 4930). In this regard, each of the guide rollers 4940, 4950 may include at least two separate portions, including a rotating contact portion that is rotationally mounted to a respective engaging portion 4942, 4952, and the fixed engaging portion 4942, 4952. Each of the rotating contact portions may include, for example, a bearing.

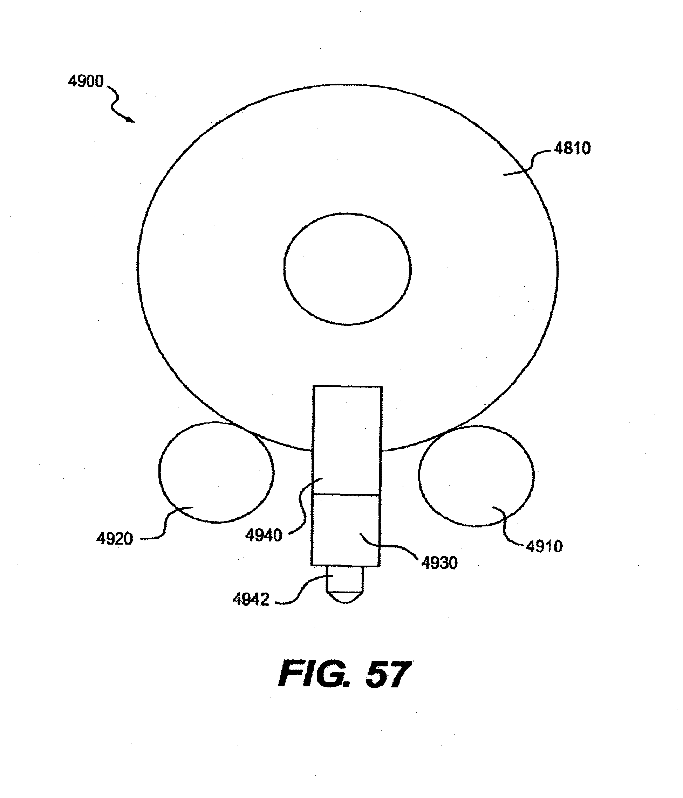

FIG. 57 shows a side view of the lidding roll centering system 4900. As seen in FIG. 57, the longitudinal axis of each of the guide rollers 4940, 4950 may be aligned with the central axis of the lidding roll 4810, which is substantially perpendicular to the longitudinal axes of the guide rollers 4940, 4950.

The guide rollers 4940, 4950 may be configured to be easily removed, so as to allow for efficient replacement in case one (or both) of the guide rollers 4940, 4950 is defective, damaged, or a guide roller of a different dimension is desired (e.g., a larger/smaller diameter and/or a longer/shorter length). The removable configuration of the guide rollers 4940, 4950 may assist in loading the lidding roll 4810 into the lidding roll centering system 4900. For example, the guide roller 4940 may be removed and the lidding roll 4810 inserted into the lidding roll centering system 4900, with the other guide roller 4950 functioning as a stop to prevent the lidding roll 4810 from moving further than the contact surface of the guide roller 4950. Then, the guide roller 4940 may be affixed to the common bar 4930.

Although the example of the lidding roll centering system 4900 is disclosed to include a pair of cradle rollers 4910, 4920, the system may, instead, include a mandrel (not shown) which protrudes through the center core of the lidding role 4810. In this alternative embodiment, different types of spacers may be used to center the lidding roll 4810 on the mandrel, as understood by those having ordinary skill in the art.

It is noted that container transferors, grippers, and the like, described herein may be operated using various types of actuators, including pneumatic, hydraulic, servo-motoric, or the like. It is further noted that the in-feed controller and/or the lidding feed controller may be coupled to a network to allow for remote monitoring and/or control. Further, the in-feed controller and/or the lidding feed controller may be configured to receive a computer-readable medium comprising a computer program, which, when executed on the in-feed controller and/or the lidding feed controller may cause each of the processes described herein to be carried out. The computer-readable medium may include a dedicated section of code for each of the processes described herein.

It is further noted that some of the parts disclosed herein, which include, for example, stainless steel, steel, aluminum, or the like, may be coated with, for example, NEDOX® from General Mangaplate Corp., of New Jersey, and 202 series coatings such as, for example, 202P from Endura Coatings LLC. These coatings may give, for example, aluminum parts the appearance of stainless steel, high resistance against harsh chemicals, high resistance against wear, exceptional harness (e.g., up to Rc 68), very low friction (e.g., as low as 0.09), and the like.

## Claims

1. A sealing system that is configured to receive a container (250) and seal the container (250) with a lidding (4170, 4830), the system comprising:
a container transferor (280, 2900, 2900', 2900", 2900"', 2900"") that is configured to receive a batch of containers (250) and transport the batch of containers (250) to a sealing assembly; and
a modular seal assembly that is configured to seal the batch of containers (250) with a lidding (4170, 4830), wherein the modular seal assembly comprises a sealing module (3110) that is configured to be removable from the modular seal assembly without removing any other one of a plurality of sealing modules (3110) in the modular seal assembly;
the sealing module (3110) comprises a piston (4160) that is coupled to one of a cutter (4150) and a sealer (4140),
**characterized in that**
the sealing module (3110) is configured to:
supply a first gas to a head cavity (4142),
supply a second gas to a container cavity (4144), and
supply a third gas to a lower tool cavity (4146),
wherein the head cavity (4142), the container cavity (4144) and the lower tool cavity (4146) are configured to prevent the first gas, the second gas, and the third gas from traveling between any of the head cavity (4142), the container cavity (4144) and the lower tool cavity (4146).

2. The sealing system of claim 1, the system further comprising:
an in-feeder (20, 20', 20", 20"', 20"") that is configured to receive a plurality of containers (250) and transport a batch of containers (250) that are selected from the plurality of containers (250); and wherein the modular seal assembly comprises:
a docking station that is configured to hold a plurality of said sealing modules (3110).

3. The sealing system of Claim 2, wherein the docking station comprises a docking station frame (3120) that is configured to supply a first gas to the sealing module (3110).

4. The sealing system of Claim 3, wherein the docking station frame (3120) comprises:
an upper frame part (3140); and
a lower frame part (3130).

5. The sealing system of Claim 3, wherein the sealing module (3110) comprises:
a channel that is configured to receive the third gas from the docking station frame (3120) and to supply the third gas to a lower tool cavity (4146), or to receive the third gas from the lower tool cavity (4146) and to supply the third gas to the docking station frame (3120).

6. The sealing system of Claim 5, wherein the channel is configured to supply the third gas only to the lower tool cavity (4146) or to remove the third gas only from the lower tool cavity (4146).

7. The sealing system of Claim 2, wherein the modular seal assembly further comprises:
a channel duct (4210) that is configured to carry the first gas from a gas supply source.

8. The sealing system of Claim 7, wherein the docking station comprises the channel duct (4210).

9. The sealing system of Claim 7, wherein the channel duct (4210) is further configured to supply the first gas to the sealing module (3110).

10. The sealing system of Claim 6, wherein the docking station attaches to a top plate (4190) that is configured to carry the first gas from a gas supply source.

11. The sealing system of Claim 2, wherein the docking station comprises:
a docking station frame (3120) that is configured to hold the plurality of sealing modules (3110),
wherein the docking station frame (3120) comprises a mounting guide (3150) that is configured to slidably support the docking station frame (3120),
wherein the mounting guide (3150) is further configured to guide the docking station frame (3120) during removal of the docking station frame (3120) from the sealing system and during replacement of the docking station into the sealing system.

12. The sealing system of Claim 2, the system further comprising:
a utility connector (3115) that is configured to be coupled to the sealing module (3110) and a docking station frame (3120).

13. The sealing system according to claim 2, wherein the in-feeder (20, 20', 20", 20"', 20"") comprises a spacing-pacing conveyor (210) that is configured to receive a plurality of containers (250) and positively space the plurality of containers (250) to a predetermined pitch.

14. The sealing system of Claim 13, further comprising:
a lidding feeder that includes a dancer roll assembly; and
a counterweight lift assembly.

## Patentansprüche

1. Versiegelungssystem, das dazu ausgelegt ist, einen Behälter (250) zu empfangen und den Behälter (250) mit einer Deckfolie (4170, 4830) zu versiegeln, wobei das System umfasst:
eine Behälterweitergabevorrichtung (280, 2900, 2900', 2900", 2900"', 2900""), die dazu ausgelegt ist, eine Charge von Behältern (250) zu empfangen und die Charge von Behältern (250) zu einer Versiegelungsanordnung zu transportieren; und
eine modulare Versiegelungsanordnung, die dazu ausgelegt ist, die Charge von Behältern (250) mit einer Deckfolie (4170, 4830) zu versiegeln, wobei die modulare Versiegelungsanordnung ein Versiegelungsmodul (3110) umfasst, das so konfiguriert ist, dass es von der modularen Versiegelungsanordnung entfernbar ist, ohne irgendein anderes einer Vielzahl von Versiegelungsmodulen (3110) in der modularen Versiegelungsanordnung zu entfernen;
wobei das Versiegelungsmodul (3110) einen Kolben (4160) umfasst, der mit einer von einer Schneidvorrichtung (4150) und einer Versiegelungsvorrichtung (4140) gekoppelt ist,
**dadurch gekennzeichnet, dass**
das Versiegelungsmodul (3110) dazu ausgelegt ist:
ein erstes Gas zu einem Kopfhohlraum (4142) zuzuführen,
ein zweites Gas zu einem Behälterhohlraum (4144) zuzuführen, und
ein drittes Gas zu einem unteren Werkzeughohlraum (4146) zuzuführen,
wobei der Kopfhohlraum (4142), der Behälterhohlraum (4144) und der untere Werkzeughohlraum (4146) dazu ausgelegt sind zu verhindern, dass das erste Gas, das zweite Gas und das dritte Gas sich zwischen irgendeinem des Kopfhohlraums (4142), des Behälterhohlraums (4144) und des unteren Werkzeughohlraums (4146) bewegen.

2. Versiegelungssystem nach Anspruch 1, wobei das System ferner umfasst:
einen Zubringer (20, 20', 20", 20"', 20""), der dazu ausgelegt ist, eine Vielzahl von Behältern (250) zu empfangen und eine Charge von Behältern (250), die aus der Vielzahl von Behältern (250) ausgewählt sind, zu transportieren; und wobei die modulare Versiegelungsanordnung umfasst:
eine Koppelstation, die dazu ausgelegt ist, eine Vielzahl der Versiegelungsmodule (3110) zu halten.

3. Versiegelungssystem nach Anspruch 2, wobei die Koppelstation einen Koppelstationsrahmen (3120) umfasst, der dazu ausgelegt ist, ein erstes Gas zum Versiegelungsmodul (3110) zuzuführen.

4. Versiegelungssystem nach Anspruch 3, wobei der Koppelstationsrahmen (3120) umfasst:
einen oberen Rahmenteil (3140); und
einen unteren Rahmenteil (3130).

5. Versiegelungssystem nach Anspruch 3, wobei das Versiegelungsmodul (3110) umfasst:
einen Kanal, der dazu ausgelegt ist, das dritte Gas vom Koppelstationsrahmen (3120) zu empfangen und das dritte Gas zu einem unteren Werkzeughohlraum (4146) zuzuführen, oder das dritte Gas vom unteren Werkzeughohlraum (4146) zu empfangen und das dritte Gas zum Koppelstationsrahmen (3120) zuzuführen.

6. Versiegelungssystem nach Anspruch 5, wobei der Kanal dazu ausgelegt ist, das dritte Gas nur zum unteren Werkzeughohlraum (4146) zuzuführen oder das dritte Gas nur aus dem unteren Werkzeughohlraum (4146) zu entfernen.

7. Versiegelungssystem nach Anspruch 2, wobei die modulare Versiegelungsanordnung ferner umfasst:
eine Kanalführung (4210), die dazu ausgelegt ist, das erste Gas von einer Gaszufuhrquelle zu befördern.

8. Versiegelungssystem nach Anspruch 7, wobei die Koppelstation die Kanalführung (4210) umfasst.

9. Versiegelungssystem nach Anspruch 7, wobei die Kanalführung (4210) ferner dazu ausgelegt ist, das erste Gas zum Versiegelungsmodul (3110) zuzuführen.

10. Versiegelungssystem nach Anspruch 6, wobei die Koppelstation an einer oberen Platte (4190) befestigt ist, die dazu ausgelegt ist, das erste Gas von einer Gaszufuhrquelle zu befördern.

11. Versiegelungssystem nach Anspruch 2, wobei die Koppelstation umfasst:
einen Koppelstationsrahmen (3120), der dazu ausgelegt ist, die Vielzahl von Versiegelungsmodulen (3110) zu halten,
wobei der Koppelstationsrahmen (3120) eine Montageführung (3150) umfasst, die dazu ausgelegt ist, den Koppelstationsrahmen (3120) verschiebbar abzustützen,
wobei die Montageführung (3150) ferner dazu ausgelegt ist, den Koppelstationsrahmen (3120) während der Entfernung des Koppelstationsrahmens (3120) vom Versiegelungssystem und während des Austauschs der Koppelstation in das Versiegelungssystem zu führen.

12. Versiegelungssystem nach Anspruch 2, wobei das System ferner umfasst:
ein Versorgungsverbindungselement (3115), das dazu ausgelegt ist, mit dem Versiegelungsmodul (3110) und einem Koppelstationsrahmen (3120) gekoppelt zu werden.

13. Versiegelungssystem nach Anspruch 2, wobei der Zubringer (20, 20', 20", 20"', 20"") eine Abstands-Schrittsteuerungs-Fördereinrichtung (210) umfasst, die dazu ausgelegt ist, eine Vielzahl von Behältern (250) zu empfangen und die Vielzahl von Behältern (250) zwangsweise auf ein vorbestimmtes Abstandsmaß zu beabstanden.

14. Versiegelungssystem nach Anspruch 13, das ferner umfasst:
einen Deckfolienzubringer, der eine Tänzerwalzenanordnung umfasst; und
eine Gegengewichthubanordnung.

## Revendications

1. Système d'étanchéité, configuré pour loger un contenant (250) et assurer l'étanchéité du contenant (250) avec un operculage (4170, 4830), le système comprenant :
un transféreur (280, 2900, 2900', 2900", 2900"', 2900"") de contenant, configuré pour loger un lot de contenants (250) et transporter le lot de contenants (250) à un ensemble d'étanchéité et
un ensemble modulaire d'étanchéité configuré pour assurer l'étanchéité du lot de contenants (250) avec un operculage (4170, 4830), dans lequel l'ensemble modulaire d'étanchéité comprend un module (3110) d'étanchéité, configuré pour pouvoir être enlevé de l'ensemble modulaire d'étanchéité sans enlever tout autre élément d'une pluralité de modules (3110) d'étanchéité dans l'ensemble modulaire d'étanchéité ;
le module (3110) d'étanchéité comprend un piston (4160) qui est couplé à un élément parmi un dispositif (4150) de coupe et un produit d'étanchéité (4140),
**caractérisé en ce que**
le module (3110) d'étanchéité est configuré pour :
fournir un premier gaz à une cavité (4142) de tête,
fournir un deuxième gaz à une cavité (4144) de contenant et
fournir un troisième gaz à une cavité inférieure (4146) d'outil,
dans lequel la cavité (4142) de tête, la cavité (4144) de contenant et la cavité inférieure (4146) d'outil sont configurées pour empêcher le premier gaz, le deuxième gaz et le troisième gaz de circuler entre une cavité quelconque parmi la cavité (4142) de tête, la cavité (4144) de contenant et la cavité inférieure (4146) d'outil.

2. Système d'étanchéité selon la revendication 1, le système comprenant en outre :
un chargeur d'entrée (20, 20', 20", 20"', 20""), configuré pour loger une pluralité de contenants (250) et transporter un lot de contenants (250), sélectionnés dans la pluralité de contenants (250) et dans lequel l'ensemble modulaire d'étanchéité comprend :
une station d'amarrage, configurée pour retenir une pluralité desdits modules (3110) d'étanchéité.

3. Système d'étanchéité selon la revendication 2, dans lequel la station d'amarrage comprend un bâti (3120) de station d'amarrage, configuré pour fournir un premier gaz au module (3110) d'étanchéité.

4. Système d'étanchéité selon la revendication 3, dans lequel le bâti (3120) de station d'amarrage comprend :
une partie supérieure (3140) de bâti et
une partie inférieure (3130) de bâti.

5. Système d'étanchéité selon la revendication 3, dans lequel le module (3110) d'étanchéité comprend :
un canal, configuré pour loger le troisième gaz du bâti (3120) de station d'amarrage et pour fournir le troisième gaz à une cavité inférieure (4146) d'outil ou pour loger le troisième gaz de la cavité inférieure (4146) d'outil et pour fournir le troisième gaz au bâti (3120) de station d'amarrage.

6. Système d'étanchéité selon la revendication 5, dans lequel le canal est configuré pour fournir le troisième gaz uniquement à la cavité inférieure (4146) d'outil ou pour enlever le troisième gaz uniquement de la cavité inférieure (4146) d'outil.

7. Système d'étanchéité selon la revendication 2, dans lequel l'ensemble modulaire d'étanchéité comprend en outre :
un conduit (4210) de canal, configuré pour acheminer le premier gaz à partir d'une source d'alimentation en gaz.

8. Système d'étanchéité selon la revendication 7, dans lequel la station d'amarrage comprend le conduit (4210) de canal.

9. Système d'étanchéité selon la revendication 7, dans lequel le conduit (4210) de canal est configuré en outre pour fournir le premier gaz au module (3110) d'étanchéité.

10. Système d'étanchéité selon la revendication 6, dans lequel la station d'amarrage est fixée à une plaque supérieure (4190), configurée pour acheminer le premier gaz à partir d'une source d'alimentation en gaz.

11. Système d'étanchéité selon la revendication 2, dans lequel la station d'amarrage comprend :
un bâti (3120) de station d'amarrage, configuré pour retenir la pluralité de modules (3110) d'étanchéité,
dans lequel le bâti (3120) de station d'amarrage comprend un guide (3150) de montage, configuré pour supporter à coulissement le bâti (3120) de station d'amarrage,
dans lequel le guide (3150) de montage est configuré en outre pour guider le bâti (3120) de station d'amarrage pendant la dépose du bâti (3120) de station d'amarrage du système d'étanchéité et durant le remplacement de la station d'amarrage dans le système d'étanchéité.

12. Système d'étanchéité selon la revendication 2, le système comprenant en outre :
un connecteur (3115) d'utilitaire, configuré pour être couplé au module (3110) d'étanchéité et à un bâti (3120) de station d'amarrage.

13. Système d'étanchéité selon la revendication 2, dans lequel le chargeur d'entrée (20, 20', 20", 20"', 20"") comprend un convoyeur (210) espacement - régulation, configuré pour loger une pluralité de contenants (250) et pour espacer positivement la pluralité de contenants (250) suivant un pas prédéterminé.

14. Système d'étanchéité selon la revendication 13, comprenant en outre :
un chargeur d'operculage, qui comporte un ensemble, formant rouleau fou et
un ensemble, formant élévateur à contrepoids.
